# EUROPEAN PATENT APPLICATION

(11) **EP 4 664 971 A1**
(43) Date of publication of application: **17.12.2025**
(21) Application number: 24763122.9
(22) Date of filing: 27.02.2024
(51) Int. Cl.: H04W 24/04

(54) **DEVICE MANAGEMENT NETWORK ELEMENT DETERMINATION METHOD AND COMMUNICATION APPARATUS**

(30) Priority: 28.02.2023 CN 202310234396
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN); HUANG, Kang, Shenzhen, Guangdong 518129 (CN)
(74) Representative: Körber, Martin Hans
(86) International application number: PCT/CN2024/078711
(87) International publication number: WO 2024/179441

(57) **Abstract**

This application provides a device management network element determining method and a communication apparatus. The method includes: A first network element receives an operation message from a second network element, where the operation message is used to perform an operation on a target terminal, and the target terminal is a device corresponding to a first passive internet of things service. The first network element obtains an identifier of a first device management network element based on the operation message, where the first device management network element is configured to provide a service for the target terminal. The first network element sends the operation message to the first device management network element. In this method, in a passive internet of things service, the second network element (namely, a server/an application function network element) triggers a procedure of selecting a device management network element by using the operation message, to select the first device management network element that has a passive internet of things service capability, so that the first device management network element provides a service for a passive terminal device, to ensure that communication transmission can be performed between the second network element and the passive terminal device.

## Description

This application claims priority to Chinese Patent Application No. 202310234396.5, filed with the China National Intellectual Property Administration on February 28, 2023 and entitled "DEVICE MANAGEMENT NETWORK ELEMENT DETERMINING METHOD AND COMMUNICATION APPARATUS", which is incorporated herein by reference in its entirety.

### TECHNICAL FIELD

This application relates to the communication field, and in particular, to a device management network element determining method and a communication apparatus.

### BACKGROUND

An access and mobility management function (access and mobility management function, AMF) is a control plane function provided by an operator network, and is responsible for access control and mobility management for access of a terminal device to the operator network. During communication, AMF selection is usually performed in the following three cases. Case 1: After the terminal device sends a registration request to an access network device, the access network device selects, based on a related parameter provided by the terminal device (for example, uplink signaling data of the terminal device), an AMF for serving the terminal device. Case 2: When an original AMF that serves the terminal device is no longer suitable for serving the terminal device, the original AMF may select, based on information about the original AMF (for example, AMF identification information, a location area identity, or an AMF group identifier), a new AMF for serving the terminal device. Case 3: When an original AMF that serves the terminal device is no longer suitable for serving the terminal device, a control plane network element function (control plane network function, CP NF) other than the original AMF may select, based on information about the original AMF, a new AMF for serving the terminal device.

In a passive internet of things (Passive IoT, P-IoT; or referred to as Ambient IoT, A-IoT) service, a server/an application function (Application Function, AF) usually needs to directly send downlink data to a core network, to cause the core network to indicate an access network device to perform random access to a tag, and to cause the core network to send the downlink data to the tag. In this process, because it is difficult for the server/the AF to obtain information about a core network element, selecting a network element (the network element, configured to perform access control or mobility management on a tag corresponding to the P-IoT service, including but not limited to an AMF) cannot be triggered, and consequently, the server/the AF cannot communicate with the tag.

### SUMMARY

Embodiments of this application provide a device management network element determining method and a communication apparatus, so that a first device management network element can be determined in a passive internet of things service. This helps communicate between a second network element and a passive terminal device.

According to a first aspect, an embodiment of this application provides a device management network element determining method, and the method may be applied to a first network element (for example, a device or a chip of the first network element). In the method, the first network element receives an operation message from a second network element, where the operation message is used to perform an operation on a target terminal, and the target terminal is a device corresponding to a first passive internet of things service. The first network element obtains an identifier of a first device management network element based on the operation message, where the first device management network element is configured to provide a service for the target terminal. The first network element sends the operation message to the first device management network element.

Based on the method described in the first aspect, the second network element (namely, a server/an application function network element) triggers a procedure of selecting a device management network element by using the operation message, to select the first device management network element that has a passive internet of things service capability, so that the first device management network element provides a service for a passive terminal device. This helps ensure reliability of communication between the second network element and the passive terminal device.

In a possible implementation, the first network element obtains location information of the target terminal, where the target terminal is at a first location. Further, the first network element determines the identifier of the first device management network element based on a locally stored first mapping relationship set, where the first mapping relationship set includes a mapping relationship between the identifier of the first device management network element and information about the first location. This possible implementation is implemented, so that the first network element can efficiently determine the first device management network element based on the first mapping relationship set stored in the first network element and the location information of the target terminal.

In a possible implementation, the first network element obtains the first mapping relationship set from a third network element. The first network element obtains the location information of the target terminal, where the target terminal is at the first location. Further, the first network element determines the identifier of the first device management network element based on the first mapping relationship set, where the first mapping relationship set includes the mapping relationship between the identifier of the first device management network element and the information about the first location. This possible implementation is implemented, so that the first network element can obtain the first mapping relationship set from another network element, and determine the first device management network element based on the first mapping relationship, to reduce a limitation on the first network element and improve flexibility of performing the solution.

In a possible implementation, the operation message includes an identifier of the second network element. Further, the first network element determines the identifier of the first device management network element based on the identifier of the second network element and a locally stored second mapping relationship set, where the second mapping relationship set includes a mapping relationship between the identifier of the first device management network element and the identifier of the second network element. This possible implementation is implemented, so that the first network element can efficiently determine the first device management network element based on the second mapping relationship set stored in the first network element and the identifier of the second network element.

In a possible implementation, the operation message includes the identifier of the second network element. Further, the first network element obtains the second mapping relationship set from the third network element. The first network element determines the identifier of the first device management network element based on the identifier of the second network element and the second mapping relationship set, where the second mapping relationship set includes a mapping relationship between the identifier of the first device management network element and the identifier of the second network element. This possible implementation is implemented, so that the first network element can obtain the second mapping relationship set from another network element, and determine the first device management network element based on the second mapping relationship, to reduce a limitation on the first network element and improve flexibility of performing the solution.

In a possible implementation, the operation message includes the identifier of the second network element. Further, the first network element obtains the location information of the target terminal, where the target terminal is at the first location. Further, the first network element determines the first device management network element based on the identifier of the second network element, the second mapping relationship set, the information about the first location, and the first mapping relationship set. The first mapping relationship set includes the mapping relationship between the identifier of the first device management network element and the information about the first location, and the second mapping relationship set includes the mapping relationship between the identifier of the first device management network element and the identifier of the second network element. This possible implementation is implemented, so that the first network element can accurately determine, based on the second mapping relationship set and the first mapping relationship set that are stored in the first network element, the first device management network element corresponding to both the identifier of the second network element and the information about the first location.

In a possible implementation method, the operation message includes the identifier of the second network element. The first network element obtains a mapping relationship set from the third network element, where the mapping relationship set is the first mapping relationship set and the second mapping relationship set, where the first mapping relationship set includes the mapping relationship between the identifier of the first device management network element and the information about the first location; and the second mapping relationship set includes the mapping relationship between the identifier of the first device management network element and the identifier of the second network element. Further, the first network element obtains the location information of the target terminal, where the target terminal is at the first location; and determines the first device management network element based on the identifier of the second network element, the second mapping relationship set, the information about the first location, and the first mapping relationship set.

In a possible implementation, the operation message includes the identifier of the second network element. The first network element determines the information about the first location of the target terminal based on the identifier of the second network element and a locally stored third mapping relationship set, where the third mapping relationship set includes a mapping relationship between the identifier of the second network element and the information about the first location. Further, the first network element determines the first device management network element based on the information about the first location and the locally stored first mapping relationship set. The first mapping relationship set includes the mapping relationship between the identifier of the first device management network element and the information about the first location. This possible implementation is implemented, so that when the operation message does not include the location information of the target terminal, the first network element may accurately determine, based on the second mapping relationship set and the first mapping relationship set that are stored in the first network element, the first device management network element corresponding to the location information of the target terminal.

In a possible implementation method, the operation message includes the identifier of the second network element. The first network element obtains a mapping relationship set from the third network element, where the mapping relationship set is the first mapping relationship set and the third mapping relationship set, where the first mapping relationship set includes the mapping relationship between the identifier of the first device management network element and the information about the first location; and the third mapping relationship set includes the mapping relationship between the identifier of the second network element and the information about the first location. Further, the first network element determines the information about the first location of the target terminal based on the identifier of the second network element and the third mapping relationship set, and determines the first device management network element based on the information about the first location and the first mapping relationship set.

In a possible implementation, the first network element obtains a mapping relationship set from the third network element, where the mapping relationship set is the first mapping relationship set and/or the second mapping relationship set, where the first mapping relationship set includes the mapping relationship between the identifier of the first device management network element and the information about the first location; and the second mapping relationship set includes the mapping relationship between the identifier of the first device management network element and the identifier of the second network element. Further, the first network element sends the mapping relationship set to the second network element. The first network element receives the identifier of the first device management network element from the second network element. This possible implementation is implemented, so that the first network element can obtain the identifier of the first device management network element from the second network element, to reduce calculation complexity of the first network element.

In a possible implementation, the first network element sends a locally stored mapping relationship set to the second network element, where the mapping relationship set is the first mapping relationship set and/or the second mapping relationship set, where the first mapping relationship set includes the mapping relationship between the identifier of the first device management network element and the information about the first location; and the second mapping relationship set includes the mapping relationship between the identifier of the first device management network element and the identifier of the second network element. The first network element receives the identifier of the first device management network element from the second network element. This possible implementation is implemented, so that the first network element can obtain the identifier of the first device management network element from the second network element, to reduce calculation complexity of the first network element.

In a possible implementation, the mapping relationship set is the first mapping relationship set. The second network element receives the first mapping relationship set from the first network element. The second network element determines that the target terminal is at the first location. The second network element determines the identifier of the first device management network element based on the information about the first location and the first mapping relationship set. The second network element sends the identifier of the first device management network element to the first network element.

In a possible implementation, the mapping relationship set is the second mapping relationship set. The second network element receives the first mapping relationship set from the first network element. The second network element determines the identifier of the first device management network element based on the identifier of the second network element and the second mapping relationship set. The second network element sends the identifier of the first device management network element to the first network element.

In a possible implementation, the mapping relationship set includes the first mapping relationship set and the second mapping relationship set, where the first mapping relationship set includes the mapping relationship between the identifier of the first device management network element and the information about the first location; and the second mapping relationship set includes the mapping relationship between the identifier of the first device management network element and the identifier of the second network element. The second network element receives the mapping relationship set from the first network element. The second network element determines that the target terminal is at the first location. The second network element determines the identifier of the first device management network element based on the identifier of the second network element, the second mapping relationship set, the information about the first location, and the first mapping relationship set. The second network element sends the identifier of the first device management network element to the first network element.

In a possible implementation, the first network element sends a first request message to a fourth network element, where the first request message is used to request to select a device management network element. The first network element receives a first response message from the fourth network element, where the first response message includes the identifier of the first device management network element. This possible implementation is implemented, so that the first network element can obtain the identifier of the first device management network element from the fourth network element, to reduce calculation complexity of the first network element.

In a possible implementation, the fourth network element receives the first request message from the first network element, where the first request message includes the information about the first location of the target terminal. The fourth network element determines the identifier of the first device management network element based on the locally stored first mapping relationship set, where the first mapping relationship set includes the mapping relationship between the identifier of the first device management network element and the information about the first location. The fourth network element sends the first response message to the first network element, where the first response message includes the identifier of the first device management network element.

In a possible implementation, the fourth network element receives the first request message from the first network element, where the first request message includes the identifier of the second network element. The fourth network element determines the identifier of the first device management network element based on the locally stored second mapping relationship set, where the second mapping relationship set includes the mapping relationship between the identifier of the first device management network element and the identifier of the second network element. The fourth network element sends the first response message to the first network element, where the first response message includes the identifier of the first device management network element.

In a possible implementation, the fourth network element receives the first request message from the first network element, where the first request message includes capability information of the first device management network element. The fourth network element determines the identifier of the first device management network element based on the capability information and a locally stored fourth mapping relationship set, where the fourth mapping relationship set includes a mapping relationship between the identifier and the capability information that are of the first device management network element. The fourth network element sends the first response message to the first network element, where the first response message includes the identifier of the first device management network element.

In a possible implementation, the fourth network element receives the first request message from the first network element, where the first request message includes the information about the first location of the target terminal and the identifier of the second network element. The fourth network element determines the first device management network element based on the identifier of the second network element, the locally stored second mapping relationship set, the information about the first location, and the locally stored first mapping relationship set. The first mapping relationship set includes the mapping relationship between the identifier of the first device management network element and the information about the first location, and the second mapping relationship set includes the mapping relationship between the identifier of the first device management network element and the identifier of the second network element.

In a possible implementation, the fourth network element receives the first request message from the first network element, where the first request message includes the information about the first location of the target terminal and capability information of the first device management network element. The fourth network element determines the first device management network element based on the information about the first location, the locally stored first mapping relationship set, the capability information, and the locally stored fourth mapping relationship set. The first mapping relationship set includes the mapping relationship between the identifier of the first device management network element and the information about the first location, and the fourth mapping relationship set includes the mapping relationship between the identifier and the capability information that are of the first device management network element.

In a possible implementation, the fourth network element receives the first request message from the first network element, where the first request message includes the identifier of the second network element and the capability information of the first device management network element. The fourth network element determines the first device management network element based on the identifier of the second network element, the locally stored second mapping relationship set, the capability information, and the locally stored fourth mapping relationship set. The second mapping relationship set includes a mapping relationship between the identifier of the first device management network element and the identifier of the second network element, and the fourth mapping relationship set includes a mapping relationship between the identifier and the capability information that are of the first device management network element.

In a possible implementation, the fourth network element receives the first request message from the first network element, where the first request message includes the information about the first location of the target terminal, the identifier of the second network element, and capability information of the first device management network element. The fourth network element determines the first device management network element based on the identifier of the second network element, a locally stored second mapping relationship set, the information about the first location, the locally stored first mapping relationship set, the capability information, and a locally stored fourth mapping relationship set. The first mapping relationship set includes the mapping relationship between the identifier of the first device management network element and the information about the first location, the second mapping relationship set includes a mapping relationship between the identifier of the first device management network element and the identifier of the second network element, and the fourth mapping relationship set includes a mapping relationship between the identifier and the capability information that are of the first device management network element.

In a possible implementation, the first device management network element receives the operation message from the first network element. The first device management network element sends, based on the operation message, indication information to an access network device corresponding to the target terminal, where the indication information indicates to perform random access to the target terminal. The access network device indicates, based on the indication information, the target terminal to perform random access. This possible manner is implemented, so that after the first device management network element is determined, the first device management network element provides a service for the target terminal (for example, indicates random access to the target terminal) based on the operation message, and the terminal device can receive an operation instruction from the second network element by using a core network, to ensure communication between the second network element and the target terminal.

In a possible implementation, the first device management network element determines that a location of the target terminal is updated to a second location. The first device management network element determines that the second location is not in a service range of the first device management network element. The first device management network element obtains an identifier of a second device management network element, where the identifier of the second device management network element corresponds to information about the second location. The first device management network element sends the operation message and context information of the target terminal to the second device management network element. This possible implementation is implemented, so that when the first device management network element cannot provide the service for the target terminal, the first device management network element can determine that the second device management network element provides the service for the target terminal, to ensure reliability of communication between the second network element and the target terminal.

In a possible implementation, the first device management network element obtains the first mapping relationship set, where the first mapping relationship set further includes a mapping relationship between the identifier of the second device management network element and the information about the second location. The first device management network element determines the identifier of the second device management network element based on the information about the second location and the first mapping relationship set.

In a possible implementation, the first device management network element sends a second request message to the fourth network element, where the second request message is used to request the fourth network element to determine a device management network element that provides a service for the target terminal, and the second request message includes the information about the second location and requirement information of a passive internet of things service capability. The first device management network element receives a second response message from the fourth network element, where the second response message includes the identifier of the second device management network element.

In a possible implementation, the fourth network element receives the second request message from the first device management network element, where the second request message is used to request the fourth network element to determine the device management network element that provides the service for the target terminal, and the second request message includes the information about the second location and the requirement information of the passive internet of things service capability. The fourth network element determines the identifier of the second device management network element based on the information about the second location and the first mapping relationship set, where the first mapping relationship set further includes the mapping relationship between the identifier of the second device management network element and the information about the second location. The fourth network element sends the identifier of the second device management network element to the first device management network element.

In a possible implementation, the operation message includes the identifier of the second network element and one or more of the following information: an operation instruction, identification information of the target terminal, indication information of the first passive internet of things service, and the location information of the target terminal.

According to a second aspect, this application further provides a device management network element determining method, and the method may be applied to a second network element (for example, a device or a chip of the second network element). In the method, the second network element determines an identifier of a first device management network element based on a mapping relationship set, where the first device management network element has a passive internet of things service capability, and the first device management network element is configured to provide a service for a target terminal; and the mapping relationship set includes a mapping relationship about an identifier of a device management network element, and the mapping relationship set may be a first mapping relationship set and/or a second mapping relationship set, where the first mapping relationship set includes a mapping relationship between location information and the identifier of the device management network element; and the second mapping relationship set includes a mapping relationship between an identifier of a server/an AF and the identifier of the device management network element. The second network element sends the identifier of the first device management network element and an operation message to a first network element. The operation message is used to perform an operation on the target terminal, and the target terminal is a device corresponding to a first passive internet of things service.

Based on the method described in the second aspect, the second network element (namely, the server/application function network element) may select the first device management network element that has a passive internet of things service capability, and the first device management network element provides a service for a passive terminal device through the first network element. This helps ensure reliability of communication between the second network element and the passive terminal device.

In a possible implementation, the second network element receives the mapping relationship set from the first network element.

In a possible implementation, when the mapping relationship set is the first mapping relationship set, the second network element determines the identifier of the first device management network element based on the first mapping relationship set and location information of the target terminal.

In a possible implementation, when the mapping relationship set is the second mapping relationship set, the second network element determines the identifier of the first device management network element based on the first mapping relationship set and an identifier of the second network element.

In a possible implementation, the mapping relationship set includes the first mapping relationship set and the second mapping relationship set. The second network element determines that the target terminal is at a first location. The second network element determines the identifier of the first device management network element based on an identifier of the second network element, the second mapping relationship set, information about the first location, and the first mapping relationship set.

In a possible implementation, the operation message includes identification information of the second network element and one or more of the following information: an operation instruction, identification information of the target terminal, indication information of a first passive internet of things service, and the location information of the target terminal.

According to a third aspect, this application further provides a device management network element determining method, and the method may be applied to a fourth network element (for example, a device or a chip of the fourth network element). In the method, the fourth network element receives a first request message from a first network element, where the first request message is used to request to select a device management network element. The fourth network element determines identification information of a first device management network element based on a mapping relationship set, where the first device management network element is configured to provide a service for a target terminal; the first device management network element has a passive internet of things service capability; and the mapping relationship set includes a mapping relationship about an identifier of the device management network element, and the mapping relationship set may be a first mapping relationship set, a second mapping relationship set, or a fourth mapping relationship set. The first mapping relationship set includes a mapping relationship between location information and the identifier of the device management network element; the second mapping relationship set includes a mapping relationship between an identifier of a server/an AF and the identifier of the device management network element; and the fourth mapping relationship set includes a mapping relationship between an identifier and capability information that are of the first device management network element; and the fourth network element sends a first response message to the first network element, where the first response message includes the identifier of the first device management network element.

Based on the method described in the third aspect, the fourth network element may select, based on a request of the first network element, the first device management network element that has the passive internet of things service capability, so that the first device management network element provides a service for a passive terminal device. This helps ensure reliability of communication between the second network element and the passive terminal device.

In a possible implementation, the first request message includes location information of the target terminal and a requirement for the device management network element to have the passive internet of things service capability. The mapping relationship set is the first mapping relationship set. The fourth network element determines the identification information of the first device management network element based on the first mapping relationship set and the location information of the target terminal.

In a possible implementation, the first request message includes an identifier of the second network element. The mapping relationship set is the second mapping relationship set. The fourth network element determines the identification information of the first device management network element based on the second mapping relationship set and the identifier of the second network element.

In a possible implementation, the first request message includes capability information of the first device management network element. The mapping relationship set is the fourth mapping relationship set. The fourth network element determines the identifier of the first device management network element based on the capability information and the fourth mapping relationship set.

In a possible implementation, the first request message includes information about the first location of the target terminal and an identifier of the second network element. The mapping relationship set includes the first mapping relationship set and the second mapping relationship set. The fourth network element determines the first device management network element based on the identifier of the second network element, the second mapping relationship set, the information about the first location, and the first mapping relationship set.

In a possible implementation, the first request message includes information about the first location of the target terminal and capability information of the first device management network element. The mapping relationship set includes the first mapping relationship set and the fourth mapping relationship set. The fourth network element determines the first device management network element based on the information about the first location, the first mapping relationship set, the capability information, and the fourth mapping relationship set.

In a possible implementation, the first request message includes an identifier of the second network element and capability information of the first device management network element. The mapping relationship set includes the second mapping relationship set and the fourth mapping relationship set. The fourth network element determines the first device management network element based on the identifier of the second network element, the second mapping relationship set, the capability information, and the fourth mapping relationship set.

In a possible implementation, the first request message includes information about the first location of the target terminal, an identifier of the second network element, and capability information of the first device management network element. The mapping relationship set includes the first mapping relationship set, the second mapping relationship set, and the fourth mapping relationship set. The fourth network element determines the first device management network element based on the identifier of the second network element, the second mapping relationship set, the information about the first location, the first mapping relationship set, the capability information, and the fourth mapping relationship set.

In a possible implementation, the fourth network element receives an information update/registration request from the first device management network element, where the information update/registration request includes the passive internet of things service capability of the first device management network element. The fourth network element maintains the mapping relationship set based on the information update/registration request.

In a possible implementation, the information update/registration request further includes one or more of the following information: a mapping relationship between the identifier of the first device management network element and the identifier of the second network element, or a mapping relationship between the identifier of the first device management network element and the location information.

According to a fourth aspect, this application provides a communication apparatus. The communication apparatus includes a module/unit configured to perform any method in the first aspect; the communication apparatus includes a module/unit configured to perform any method in the second aspect; or the communication apparatus includes a module/unit configured to perform any method in the third aspect.

According to a fifth aspect, this application provides a communication apparatus. The apparatus may be an apparatus in a first network element, or an apparatus that can be used together with the first network element. Alternatively, the communication apparatus may be a chip or a chip system. The communication apparatus may perform the method in the first aspect. Alternatively, the apparatus may be an apparatus in a second network element, or an apparatus that can be used together with the second network element. Alternatively, the communication apparatus may be a chip or a chip system. The communication apparatus may perform the method in the second aspect. Alternatively, the apparatus may be an apparatus in a fourth network element, or an apparatus that can be used together with the fourth network element. Alternatively, the communication apparatus may be a chip or a chip system. The communication apparatus may perform the method in the third aspect. A function of the communication apparatus may be implemented by hardware, or may be implemented by hardware executing corresponding software. The hardware or the software includes one or more units corresponding to the function. The unit may be software and/or hardware. For operations performed by the communication apparatus and beneficial effects, refer to the methods in the first aspect to the third aspect, and the beneficial effects. Repeated content is not described again.

According to a sixth aspect, this application provides a computer-readable storage medium. The computer-readable storage medium is configured to store computer-executable instructions. When the computer-executable instructions are executed, the method performed by the first network element in the method according to the first aspect is implemented; the method performed by the second network element in the method according to the second aspect is implemented; or the method performed by the fourth network element in the method according to the third aspect is implemented.

According to a seventh aspect, this application provides a computer program product including a computer program. When the computer program is executed, the method performed by the first network element in the method according to the first aspect is implemented; the method performed by the second network element in the method according to the second aspect is implemented; or the method performed by the fourth network element in the method according to the third aspect is implemented.

According to an eighth aspect, this application provides a device management network element determining method. The device management network element determining method is applied to a communication system, and the communication system includes a first network element, a second network element, a third network element, and a target terminal.

The first network element receives an operation message from the second network element, where the operation message is used to perform an operation on the target terminal, and the target terminal is a device corresponding to a first passive internet of things service. The first network element obtains a mapping relationship set from the third network element, where the mapping relationship set is a first mapping relationship set or a second mapping relationship set, the first mapping relationship set includes a mapping relationship between an identifier of a first device management network element and information about a first location, and the second mapping relationship set includes a mapping relationship between the identifier of the first device management network element and an identifier of the second network element. The first network element sends the mapping relationship set to the second network element. The second network element determines the identifier of the first device management network element based on the mapping relationship set. The first network element receives the identifier of the first device management network element from the second network element. The first network element sends the operation message to the first device management network element.

According to a ninth aspect, this application provides a device management network element determining method. The device management network element determining method is applied to a communication system, and the communication system includes a first network element, a second network element, a fourth network element, and a target terminal.

The first network element receives an operation message from the second network element, where the operation message is used to perform an operation on the target terminal, and the target terminal is a device corresponding to a first passive internet of things service. The first network element sends a first request message to the fourth network element, where the first request message is used to request to select a device management network element. The fourth network element determines an identifier of a first device management network element based on a locally stored mapping relationship set, where the mapping relationship set is a first mapping relationship set or a second mapping relationship set, the first mapping relationship set includes a mapping relationship between the identifier of the first device management network element and information about a first location, and the second mapping relationship set includes a mapping relationship between the identifier of the first device management network element and an identifier of the second network element. The first network element receives the identifier of the first device management network element from the fourth network element. The first network element sends the operation message to the first device management network element.

According to a tenth aspect, this application provides a communication system. The communication system includes an apparatus corresponding to a first network element, an apparatus corresponding to a second network element, an apparatus corresponding to a third network element, and an apparatus corresponding to a target terminal. Alternatively, the communication system includes an apparatus corresponding to a first network element, an apparatus corresponding to a second network element, an apparatus corresponding to a fourth network element, and an apparatus corresponding to a target terminal.

### BRIEF DESCRIPTION OF DRAWINGS

FIG. 1a is a diagram of a system architecture according to an embodiment of this application;
FIG. 1b is a diagram of a structure of a CN according to an embodiment of this application;
FIG. 2 is a schematic flowchart of a device management network element determining method according to an embodiment of this application;
FIG. 3 is a schematic flowchart of another device management network element determining method according to an embodiment of this application;
FIG. 4a is a schematic flowchart of still another device management network element determining method according to an embodiment of this application;
FIG. 4b is a schematic flowchart of still another device management network element determining method according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

The following further describes specific embodiments of this application in detail with reference to accompanying drawings.

Terms "first", "second", and the like in the specification, claims, and accompanying drawings of this application are intended to distinguish between different objects, but are not intended to describe a specific sequence. In addition, terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a particular feature, a structure, or a characteristic described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, and "at least two (items)" means two or three or more. "And/or" is used to describe an association relationship between associated objects, and indicates that three relationships may exist. For example, "A and/or B" may indicate: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

To better understand embodiments of this application, the following first describes a system architecture mentioned in embodiments of this application.

Technical solutions in embodiments of this application may be applied to various communication systems, for example, a long term evolution (long term evolution, LTE) system, an LTE frequency division duplex (frequency division duplex, FDD) system, LTE time division duplex (time division duplex, TDD), new radio (new radio, NR), a 5th generation (5th generation, 5G) communication system like a 3rd generation partner (3rd generation partner project, 3GPP) service-based network architecture (service-based architecture, SBA), or a communication system evolved after 5G like a 6th generation (6th generation, 6G) communication system.

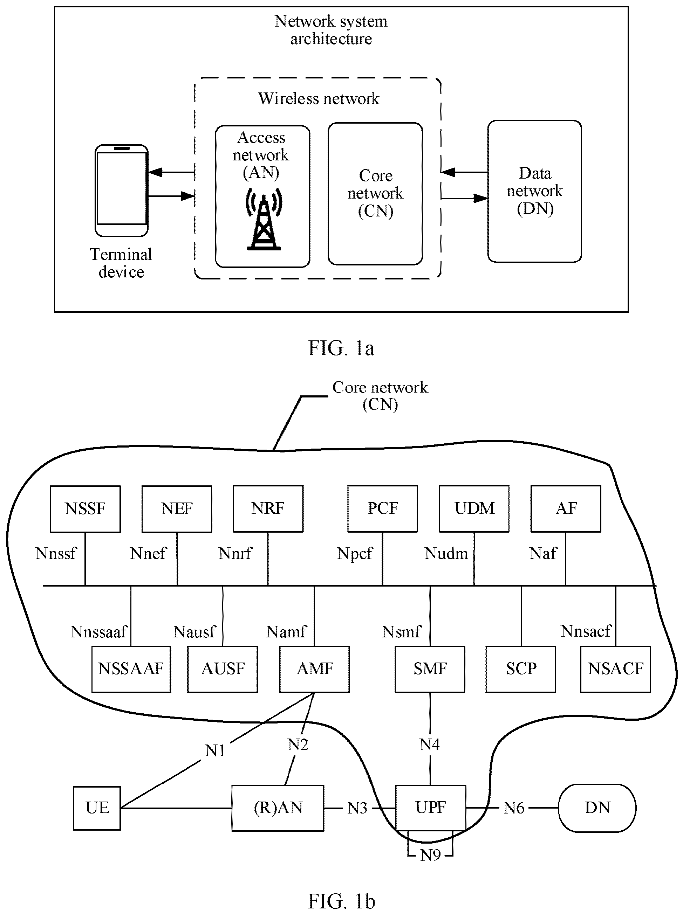

FIG. 1a is a diagram of a network system architecture according to an embodiment of this application. As shown in FIG. 1a, a terminal device may access a wireless network, to obtain a service of an external network (for example, a data network (data network, DN)) through the wireless network, or communicate with another device through the wireless network, for example, communicate with another terminal device. The wireless network includes a (radio) access network ((radio) access network, (R)AN) and a core network (core network, CN). The (R)AN (described as a RAN below) is configured to cause the terminal device to access the wireless network, and the CN is configured to: manage the terminal device and provide a gateway for communicating with the DN. The following separately describes in detail the terminal device, the RAN, the CN, and the DN in the system architecture in FIG. 1a.

### I. Terminal device

The terminal device includes a device that provides voice and/or data connectivity for a user. For example, the terminal device is a device that has a wireless transceiver function; and may be deployed on land, where the deployment includes indoor, outdoor, handheld, wearable, or vehicle-mounted deployment, may be deployed on water (for example, on a ship), or may be deployed in the air (for example, on an airplane, a balloon, and a satellite). The terminal device may be a mobile phone (mobile phone), a tablet computer (Pad), a computer that has a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or a part of functions of the terminal in this application may alternatively be implemented by using a software function running on hardware, or may be implemented by using an instantiated virtualization function on a platform (for example, a cloud platform). The terminal device in this application may be a 5G terminal or a 6G terminal. This is not limited in this application.

### II. RAN

The RAN may include one or more RAN devices (or referred to as access network devices). An interface between an access network device and a terminal device may be a Uu interface (or referred to as an air interface). It is clear that in communication evolved after 5G, names of these interfaces may remain unchanged, or may be replaced with other names. This is not limited in this application.

The access network device is a node or a device via which the terminal device accesses the wireless network. The access network device includes, for example, but is not limited to, a next-generation NodeB (next-generation Node-B, gNB) in a 5G communication system, an evolved NodeB (evolved Node-B, eNB), a next-generation evolved NodeB (next-generation eNB, ng-eNB), a radio backhaul device, a radio network controller (radio network controller, RNC), a NodeB (Node-B, NB), a home base station ((home evolved NodeB, HeNB) or (home Node-B, HNB)), a baseband unit (baseBand unit, BBU), a transmission reception point (transmission reception point, TRP), a transmission point (transmission point, TP), a mobile switching center, or a device that functions as a base station in device-to-device (Device-to-Device, D2D), vehicle-to-everything (vehicle-to-everything, V2X), machine-to-machine (machine-to-machine, M2M) communication; and may further include a central unit (central unit, CU) and a distributed unit (distributed unit, DU) in a cloud access network (cloud radio access network, C-RAN) system, a network device that is in a non-terrestrial network (non-terrestrial network, NTN) communication system and that may be deployed on a high-altitude platform or a satellite, or the like. This is not specifically limited in embodiments of this application. The RAN in this application may be a 5G RAN or a 6G RAN. This is not limited in this application.

### III. CN

The CN may include one or more CN devices (which may be understood as network element devices or function network elements (network functions, NFs)). The CN device is collectively referred to as a core network element (for example, a first core network element and a second core network element below) below.

FIG. 1b is a diagram of a structure of a CN according to this application. The CN in FIG. 1b is a diagram of a CN in a 5G network architecture. The CN shown in FIG. 1b includes a plurality of CN devices: a network slice selection function (network slice selection function, NSSF), a network exposure function (network exposure function, NEF), a network repository function (network function repository function, NRF), a policy control function (policy control function, PCF), unified data management (unified data management, UDM), an application function (application function, AF), a network control function (network control function, NCF), a network slice specific authentication and authorization function (network slice specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), and network slice admission control (Network Slice Admission Control Function, NSACF).

The AMF is a control plane function provided by an operator network, and is responsible for access control and mobility management for access of a terminal device to the operator network, for example, including functions such as mobility status management, allocation of a temporary user identity, and user authentication and authorization.

The SMF is a control plane function provided by an operator network, and is responsible for managing a protocol data unit (protocol data unit, PDU) session of a terminal device. The PDU session is a channel for PDU transmission, and the terminal device and a DN need to perform PDU transmission to each other through the PDU session. The SMF is responsible for establishment, maintenance, deletion, and the like of the PDU session. The SMF includes functions related to a session, for example, session management (for example, session establishment, modification, and release, including tunnel maintenance between a UPF and a RAN), selection and control of the UPF, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide a PDU session policy for an SMF. The policy may include a charging-related policy, a QoS-related policy, an authorization-related policy, and the like.

The UPF is a gateway provided by an operator and a gateway for communication between an operator network and a DN. The UPF includes user plane-related functions such as data packet routing and transmission, packet detection, quality of service (quality of service, QoS) handling, uplink packet detection, and downlink data packet storage.

The UDM is mainly configured for management of subscription data and authentication data of a user, authentication credit handling, user identification handling, access authorization, registration/mobility management, subscription management, SMS message management, and the like. In some embodiments, the UDM may further include a unified data repository (unified data repository, UDR). Alternatively, in some other embodiments, a 3GPP SBA in a 5G system may further include a UDR. The UDR is configured to: store and retrieve a PCF policy, store and retrieve structured data for exposure, store user information requested by an application function, and the like.

The NRF is mainly configured for registration, management, and status detection of another NF, to implement automatic management of all NFs. When each NF is started, the NF needs to be registered with the NRF to provide a service. Registration information includes an NF type, an address, a service list, and the like.

The NEF is mainly configured to support secure interaction between a network and a third-party application. The network can securely expose a network capability and an event to a third party through the NEF, to enhance or improve quality of service of an application. In addition, the network can securely obtain related data from the third party through the NEF, to enhance intelligent decision-making of the network. In addition, the NEF supports restoring structured data from a UDR or storing structured data in the UDR.

The AF is mainly configured to support interaction with a core network to provide a service, for example, influence on data routing decision-making and a policy control function, or providing some third-party services for a network side.

The foregoing CN devices may also be referred to as network elements or function network elements. In a 5G communication system, function network elements may be names of the function network elements shown in FIG. 1b. In a communication system (for example, a 6G communication system) evolved after 5G, function network elements may still be the names of the function network elements shown in FIG. 1b, or may have other names. For example, in the 5G communication system, a policy control network element may be the PCF. In the communication system (for example, the 6G communication system) evolved after 5G, the policy control function may still be the PCF, or may have another name. This is not limited in this application.

In FIG. 1b, Npcf, Nudm, Naf, Namf, Nsmf, N1, N2, N3, N4, and N6 are interface sequence numbers. For meanings of these interface sequence numbers, refer to meanings defined in related standard protocols. This is not limited herein.

### IV. DN

The DN, also be referred to as a packet data network (packet data network, PDN), is a network located outside an operator network. The operator network may access a plurality of DNs. Application servers corresponding to a plurality of services may be deployed in the DN, to provide a plurality of possible services for a terminal device.

It should be noted that the system architecture shown in FIG. 1a is merely illustrative, and cannot be considered as a specific limitation on technical solutions of this application.

To facilitate understanding of content of the solutions, the following further explains and describes some terms in embodiments of this application, to facilitate understanding by a person skilled in the art. This part is merely for ease of understanding, and cannot be considered as a specific limitation on this application.

### 1. Tag operations

A server (or an AF) may perform the following operations, included but not limited to, on a tag.

An inventory operation (which may also be referred to as an inventory operation) is to perform inventory on a currently existing tag, or may be understood as obtaining identification information of the tag. Each tag has an identifier of the tag, and the identifier of the tag may be allocated by an enterprise (that is, written into the tag when the enterprise prints the tag), or may be allocated by an operator. In a possible implementation, the identifier of the tag may be a globally unique code, for example, an electronic product code (Electronic Product Code, EPC), or may be a temporary identifier or a non-globally unique identifier. In an inventory procedure, the server (or the AF) may deliver an inventory operation instruction. Usually, the inventory operation instruction includes information such as an identification range of the tag, an identifier of a reader, and location information. After receiving the inventory operation instruction, the reader performs inventory on the tag according to the inventory instruction, and sends the identification information of the tag to the server. Alternatively, the server sends the inventory operation instruction, and the reader forwards the inventory operation instruction to the tag. The tag learns, based on content of the inventory operation instruction, that an operation is the inventory operation. The tag sends the identification information of the tag to the reader, and the reader sends the identification information of the tag to the server; or the tag sends the identification information of the tag to a core network through the reader, and the core network sends the identification information of the tag to the server.

A read operation is to read data from a tag. The tag may have a storage function, and a storage area of the tag may store data. If intending to perform the read operation on the tag, a server sends a read instruction, and a reader or a core network performs the read operation on the tag according to the instruction, reads data from a tag storage area, and sends the data to the server. In view of this definition, the read operation may further include a sensor (sensor) operation, that is, reading a sensor data of the tag.

A write operation is to write data into a tag. A server may send a write instruction, and a reader or a core network performs a write operation on the tag according to the instruction, and writes data into a storage area of the tag.

A positioning operation is to obtain location information of a tag. If intending to perform a positioning operation on the tag, a server sends a positioning instruction, and a reader or a core network performs the positioning operation on the tag, obtains a location of the tag, and sends the data to the server.

A deactivation operation enables a tag to be invalidated or deactivated. A server may send a deactivation instruction, where the deactivation instruction may include a tag identifier (to be specific, an identifier of a tag that is expected to be deactivated or invalidated). A reader or a core network performs an invalidation operation on the tag according to the instruction. After the operation is completed, the tag is invalidated or deactivated, and cannot be inventoried or undergo another operation.

For an operation of obtaining tag information (including an inventory operation, a read operation, a positioning operation, and the like), whether a server inventories a tag or reads tag data is not distinguished. The tag information is obtained by performing the operation, and the tag information may be identification information of the tag or information stored in a tag storage area.

A message exchange operation with a tag is that after receiving an instruction sent by a server, a reader performs information or message exchange with the tag, and sends information from the tag to the server. This operation is mainly for a case in which the reader does not view content of the instruction, and is only responsible for forwarding a message sent by the server to the tag and a message sent by the tag to the server.

### 2. Passive internet of things (Passive IoT, P-IoT), or referred to as ambient internet of things (Ambient IoT, A-IoT)

In a P-IoT architecture, a passive internet of things terminal or an ambient internet of things terminal, a reader (reader), and a server may be included.

The passive internet of things terminal or the ambient internet of things terminal may include a passive terminal, a semi-passive terminal, or an active terminal. The passive terminal and the semi-passive terminal usually communicate via a reflected carrier, that is, need to depend on an external carrier source for communication. However, the active terminal may usually actively generate a carrier (or may be understood as having a carrier recovery capability), may perform communication without relying on an external carrier source, and has an active communication capability. The passive terminal is a node (or a device) that is not equipped with or does not depend on a power supply device like a battery. The passive terminal may obtain energy from an environment, to support data perception, transmission, and distributed calculation, and may further store the obtained energy. In other words, the passive terminal may have an energy storage capacitor, or may not have an energy storage capacitor. If the passive terminal does not have the energy storage capacitor, the passive terminal needs to depend on an external environment to obtain energy for communication, for example, radio frequency energy. The semi-passive terminal usually has an energy storage capacitor, and may store energy in an environment, such as solar energy and wireless electric energy, in the capacitor. Usually, the semi-passive terminal may have a power amplifier, so that a communication distance of the semi-passive terminal is increased in comparison with a communication distance of the passive terminal. The active terminal may also be downward compatible with a communication mechanism of the passive terminal or the semi-passive terminal, in other words, the active terminal may be triggered, in an external excitation manner, to initiate a random access procedure and send identification information. In a possible implementation of the active terminal, the active terminal may also have an energy storage capacitor, and may obtain energy through solar energy, radio frequency, wind energy, water energy, tidal energy, or the like. A manner of obtaining the energy by the active terminal is not limited in this application.

It should be noted that the passive internet of things terminal or the ambient internet of things terminal may be in a tag form, or may be in any other terminal form. This is not limited in this application.

The reader performs non-contact bidirectional data communication in a wireless radio frequency manner, and reads or writes an electronic tag or a radio frequency card (Tag) in the wireless radio frequency manner, to identify a case in which data exchange is performed between passive terminals. The passive terminal operates in two manners. One is that when entering an effective identification range of the reader, the passive terminal receives a radio frequency signal sent by the reader, and sends information stored in a chip (which corresponds to the passive terminal) by using energy obtained through an induced current. The other is that the passive terminal may store a part of electric energy through solar energy or the like, so that the passive terminal can actively send a signal of a frequency (which may also be referred to as a semi-passive or semi-active terminal), and after receiving and decoding the information, the reader sends decoded information to a central information system for processing related data. The reader may be an access network device, for example, a base station, a pole station, a micro base station, or a macro base station. The reader may alternatively be a terminal device, for example, a device like a mobile phone, an IoT device, or a handheld reader/writer.

It should be noted that, in the following of this application, a tag is used as an example of the passive terminal, and the access network device is used as an example of the reader. This should not be considered as a specific limitation on this application. In addition, solutions in the following embodiments of this application are also applicable to the semi-passive terminal or the active terminal. For example, a target terminal in the following embodiments of this application may be the passive internet of things terminal or the ambient internet of things terminal, and a determined device management network element also serves the passive internet of things terminal or the ambient internet of things terminal.

To resolve a problem that, in a P-IoT service, a server/an AF cannot communicate with a passive terminal because device management network element selection cannot be triggered in a process in which a server/an AF directly sends downlink data to a core network, this application first provides a device management network element determining method.

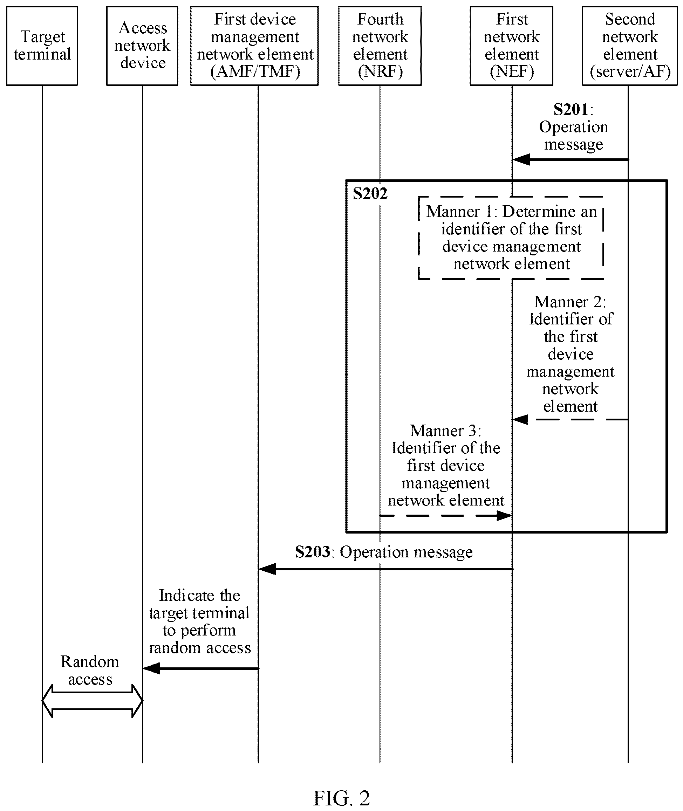

FIG. 2 is a schematic flowchart of a device management network element determining method. As shown in FIG. 2, FIG. 2 is described by using an example in which a first network element, a second network element, a third network element, a fourth network element, an access network device, and a target terminal are execution bodies. It may be understood that the device management network element determining method may alternatively be performed by chips in the first network element, the second network element, the third network element, the fourth network element, the access network device, and the target terminal.

It should be noted that the first network element mentioned in this application is a network element configured to support security interaction between a network and a third-party application. For example, the first network element is an NEF network element in a 5G core network. The second network element is a network element configured to initiate an operation message of a first passive internet of things service. For example, the second network element is a server or an AF. The third network element is a network element configured to store a mapping relationship set. For example, the third network element is a UDM/UDR in 5G. The fourth network element is a network element configured to manage another NF. For example, the fourth network element is an NRF in 5G. A device management network element mentioned below may be a network element configured to perform access control or mobility management on a passive device, or may be a core network element that has a capability of managing a passive internet of things terminal, executing an instruction for managing a passive internet of things terminal, or supporting passive internet of things. For example, the device management network element includes but is not limited to an AMF, a tag management function (tag management function, TMF), an ambient internet of things management function (ambient IoT management function, AIoTMF), or the like in 5G. A name of the device management network element is not specifically limited in this application. The target terminal is a passive terminal that needs to perform an operation related to the first passive internet of things service. There may be one or more target terminals. This is not specifically limited in this application. One target terminal is merely used as an example for description below in this application. This cannot be considered as a specific limitation on this application.

S201: The first network element receives an operation message from the second network element, where the operation message is used to perform an operation on the target terminal, and the target terminal is a device corresponding to the first passive internet of things service.

In other words, when the second network element needs to perform an operation on a target terminal corresponding to a passive internet of things service (namely, the first passive internet of things service), the third network element sends the operation message to the first network element. The operation message includes an identifier of the second network element and one or more of the following information: an operation instruction, identification information of the target terminal, indication information of the first passive internet of things service, and location information of the target terminal.

It should be understood that the identifier of the second network element identifies a specific network element that sends the operation message. For example, the identifier of the second network element may be an application function network element identifier (AF ID/AS ID) corresponding to the second network element, or may be a user identifier (for example, a user ID/an owner (owner) ID/an enterprise (enterprise) ID) corresponding to the second network element. The operation instruction indicates a specific operation corresponding to the operation message. The operation instruction includes but is not limited to an inventory operation instruction, a read operation instruction, a write operation instruction, a deactivation operation instruction, a positioning operation instruction, an operation instruction for obtaining tag information, an operation instruction for exchange a message with the target terminal, or the like. An identifier of the target terminal indicates an object corresponding to the operation message, to be specific, a specific device on which an operation is performed. In a possible implementation, the identifier of the target terminal includes (or understood as further indicating) the identifier of the second network element. For example, there is a subscription correspondence between the target terminal and the second network element, and the identifier of the second network element can be obtained provided that the identifier of the target terminal is known; or the identifier of the target terminal carries the identifier of the second network element. The indication information of the first passive internet of things service identifies that the service is a passive internet of things service, and indicates that a selected device management network element needs to have a passive internet of things service capability. For example, the indication information of the first passive internet of things service is identification information of the first passive internet of things service, data identification information of the first passive internet of things service, or the like. The location information of the target terminal indicates a location of the target terminal on which the operation needs to be performed. For example, the location information may be latitude and longitude information, coordinate information, a cell identifier, or a tracking area identity (Tracking Area identity, TAI) corresponding to the target terminal, reader location information or identification information corresponding to the terminal, or the like.

S202: The first network element obtains an identifier of a first device management network element based on the operation message, where the first device management network element is configured to provide a service for the target terminal.

After receiving the operation message, the first network element obtains the identifier of the first device management network element that provides the service for the target terminal, where the first device management network element has the passive internet of things service capability. The passive internet of things service capability includes but is not limited to: supporting access management of a passive terminal; managing and controlling a passive-type terminal; supporting mobility management (for example, paging) on a connectionless passive terminal; identifying a passive internet of things instruction (including an inventory operation, a read operation, a write operation, a positioning operation, a deactivation operation, and the like); having a filter (filter) function for filtering information about a passive terminal to which a non-enterprise user belongs; and supporting data transmission of a passive terminal. In other words, the service provided by the first device management network element for the target terminal includes but is not limited to managing a passive internet of things terminal (for example, performing access or mobility management) or executing an instruction for managing a passive internet of things terminal (for example, performing an operation on the passive internet of things terminal, where the operation includes but is not limited to a read operation, a write operation, an inventory operation, and the like).

The following describes in detail specific manners in which the first network element obtains the identifier of the first device management network element based on the operation message.

Manner 1: The first network element determines the identifier of the first device management network element based on the operation message.

In this manner, the first network element may determine identification information of the first device management network element based on a mapping relationship set. The mapping relationship set includes a mapping relationship related to an identifier of a device management network element. The mapping relationship set may be any one of a first mapping relationship set, a second mapping relationship set, a first mapping relationship set and a second mapping relationship set, a first mapping relationship set and a third mapping relationship set, or a second mapping relationship set and a third mapping relationship set. The first mapping relationship set includes a mapping relationship between the location information and the identifier of the device management network element. The second mapping relationship set includes a mapping relationship between the identifier of the second network element and the identifier of the device management network element. The third mapping relationship set includes a mapping relationship between the identifier of the second network element and the location information.

In Branch 1 of Manner 1, the mapping relationship set is a mapping relationship set locally stored in the first network element, so that the first network element may determine the identification information of the first device management network element based on the mapping relationship set. It may be understood that the mapping relationship set locally stored in the first network element may be a mapping relationship set preconfigured for the first network element or a mapping relationship set stored after the first network element obtains the mapping relationship set from another network element. This is not specifically limited in this application.

In Example 1, the mapping relationship set is the foregoing first mapping relationship set, where the first mapping relationship set includes a mapping relationship between the identifier of the first device management network element and information about a first location. In this case, the first network element obtains the location information of the target terminal (where the target terminal is at the first location), and determines the identifier of the first device management network element based on the information about the first location and the first mapping relationship set. It should be noted that the location information of the target terminal mentioned in this application may also be understood as a target operation area of a service requester (namely, the second network element).

In Example 2, the mapping relationship set is the foregoing second mapping relationship set, where the second mapping relationship set includes a mapping relationship between the identifier of the first device management network element and the identifier of the second network element. In this case, the first network element obtains the identifier of the second network element, and determines the identifier of the first device management network element based on the identifier of the second network element and the second mapping relationship set.

In Example 3, the mapping relationship set is the foregoing first mapping relationship set and the foregoing second mapping relationship set, where the first mapping relationship set includes a mapping relationship between the identifier of the first device management network element and information about a first location, and the second mapping relationship set includes a mapping relationship between the identifier of the first device management network element and the identifier of the second network element. In this case, the first network element obtains the identifier of the second network element and the location information of the target terminal (where the target terminal is at the first location), and determines the identifier of the first device management network element based on the identifier of the second network element, the second mapping relationship set, the information about the first location, and the first mapping relationship set. The determined first device management network element in this example corresponds to both the information about the first location and the identifier of the second network element. This improves accuracy of the determined first device management network element.

In Example 4, the mapping relationship set is the foregoing first mapping relationship set and the foregoing third mapping relationship set, where the first mapping relationship set includes a mapping relationship between the identifier of the first device management network element and information about a first location, and the third mapping relationship set includes a mapping relationship between the identifier of the second network element and the information about the first location. In this case, the first network element obtains the identifier of the second network element, and the first network element determines the information about the first location of the target terminal based on the identifier of the second network element and the locally stored third mapping relationship set. Further, the first network element determines the first device management network element based on the information about the first location and the first mapping relationship set.

In Example 5, the mapping relationship set is the foregoing second mapping relationship set and the foregoing third mapping relationship set, where the second mapping relationship set includes a mapping relationship between the identifier of the first device management network element and the identifier of the second network element, and the third mapping relationship set includes a mapping relationship between the identifier of the second network element and information about a first location. In this case, the first network element obtains the location information of the target terminal (where the target terminal is at the first location), and determines the identifier of the second network element based on the information about the first location and the third mapping relationship set. Further, the first network element determines the identifier of the first device management network element based on the identifier of the second network element and the second mapping relationship set.

In Branch 2 of Manner 1, the first network element obtains the mapping relationship set from the third network element, to determine the first device management network element based on the mapping relationship set.

In Example 6, the mapping relationship set is the foregoing first mapping relationship set, where the first mapping relationship set includes a mapping relationship between the identifier of the first device management network element and information about a first location. In this case, the first network element obtains the first mapping relationship set from the third network element. Further, for a manner in which the first network element determines the identifier of the first device management network element, refer to the manner in Example 1. Details are not described herein again.

In Example 7, the mapping relationship set is the foregoing second mapping relationship set, where the second mapping relationship set includes a mapping relationship between the identifier of the first device management network element and the identifier of the second network element. In this case, the first network element obtains the second mapping relationship set from the third network element. Further, for a manner in which the first network element determines the identifier of the first device management network element, refer to the manner in Example 2. Details are not described herein again.

In Example 8, the mapping relationship set is the foregoing first mapping relationship set and the foregoing second mapping relationship set, where the first mapping relationship set includes a mapping relationship between the identifier of the first device management network element and information about a first location, and the second mapping relationship set includes a mapping relationship between the identifier of the first device management network element and the identifier of the second network element. In this case, the first network element obtains the first mapping relationship set and the second mapping relationship set from the third network element. Further, for a manner in which the first network element determines the identifier of the first device management network element, refer to the manner in Example 3. Details are not described herein again.

In Example 9, the mapping relationship set is the foregoing first mapping relationship set and the foregoing third mapping relationship set, where the first mapping relationship set includes a mapping relationship between the identifier of the first device management network element and information about a first location, and the third mapping relationship set includes a mapping relationship between the identifier of the second network element and the information about the first location. In this case, the first network element obtains the first mapping relationship set and the third mapping relationship set from the third network element. Further, for a manner in which the first network element determines the identifier of the first device management network element, refer to the manner in Example 4. Details are not described herein again.

In Example 10, the mapping relationship set is the foregoing second mapping relationship set and the foregoing third mapping relationship set, where the second mapping relationship set includes a mapping relationship between the identifier of the first device management network element and the identifier of the second network element, and the third mapping relationship set includes a mapping relationship between the identifier of the second network element and information about a first location. In this case, the first network element obtains the second mapping relationship set and the third mapping relationship set from the third network element. Further, for a manner in which the first network element determines the identifier of the first device management network element, refer to the manner in Example 5. Details are not described herein again.

It should be noted that, in Manner 1, a manner in which the first network element obtains the location information of the target terminal (or the identifier of the second network element) may be that the operation message carries the location information of the target terminal (or the identifier of the second network element). In this way, the first network element can obtain the location information of the target terminal (or the identifier of the second network element) from the operation message provided that the first network element receives the operation message. A manner in which the first network element obtains the location information of the target terminal may alternatively be that the first network element queries subscription data for the location information of the target terminal based on information in the operation message. For example, the operation message carries the identifier of the target terminal, and the first network element queries, based on the identifier of the target terminal, subscription data stored in a UDR for the location information of the target terminal.

Manner 2: The first network element obtains the identifier of the first device management network element from the second network element.

In this manner, the first network element may obtain the identifier of the first device management network element from the second network element based on the operation message. For specific descriptions of the mapping relationship set, refer to the descriptions of the mapping relationship set in Manner 1. Details are not described herein again.

In Branch 1 of Manner 2, the second network element stores the mapping relationship set, for example, a mapping relationship set preconfigured for the second network element or a mapping relationship set stored after the second network element obtains the mapping relationship set from another network element. Further, the second network element may determine the identifier of the first device management network element based on the mapping relationship set, and send the identifier of the first device management network element to the first network element.

In Example 11, the mapping relationship set is the foregoing first mapping relationship set, where the first mapping relationship set includes a mapping relationship between the identifier of the first device management network element and information about a first location. In this case, the second network element determines the identifier of the first device management network element based on the information about the first location of the target terminal and the first mapping relationship set.

In Example 12, the mapping relationship set is the foregoing second mapping relationship set, where the second mapping relationship set includes a mapping relationship between the identifier of the first device management network element and the identifier of the second network element. In this case, the second network element determines the identifier of the first device management network element based on the identifier of the second network element and the second mapping relationship set.

In Example 13, the mapping relationship set includes the foregoing first mapping relationship set and the foregoing second mapping relationship set, where the first mapping relationship set includes a mapping relationship between the identifier of the first device management network element and information about a first location, and the second mapping relationship set includes a mapping relationship between the identifier of the first device management network element and the identifier of the second network element. In this case, the second network element determines the identifier of the first device management network element based on the information about the first location of the target terminal, the first mapping relationship set, the identifier of the second network element and the second mapping relationship set. In a scenario in which the second network element corresponds to a plurality of device management network elements (or the information about the first location corresponds to a plurality of device management network elements), the first device management network element that corresponds to both the information about the first location and the second network element may be determined, thereby improving accuracy of determining the first device management network element.

It should be noted that, in a summary of implementations in which the second network element stores the mapping relationship set, the second network element may send the identifier of the first device management network element to the first network element before sending the operation message; the second network element may send the identifier of the first device management network element to the first network element after sending the operation message; or the second network element simultaneously sends the operation message and the identifier of the first device management network element to the first network element. This is not specifically limited in this application.

In Branch 2 of Manner 2, the first network element obtains the mapping relationship set from the third network element, and sends the mapping relationship set to the second network element. Further, the first network element receives the identifier of the first device management network element from the second network element. In other words, after receiving the operation message from the second network element, the first network element obtains the mapping relationship from the third network element based on the operation message. Further, the second network element receives the mapping relationship set from the first network element, and determines the identifier of the first device management network element based on the mapping relationship set. The second network element sends the identifier of the first device management network element to the first network element.

In Example 14, the second network element receives a first mapping relationship set from the first network element, and determines that the target terminal is at a first location. In this case, for a manner in which the second network element determines the identifier of the first device management network element, refer to the descriptions in Example 11. Details are not described herein again.

In Example 15, the second network element receives the second mapping relationship set from the first network element. In this case, for a manner in which the second network element determines the identifier of the first device management network element, refer to the descriptions in Example 12. Details are not described herein again.

In Example 16, the second network element receives a first mapping relationship set and a second mapping relationship set from the first network element, and determines that the target terminal is at a first location. In this case, for a manner in which the second network element determines the identifier of the first device management network element, refer to the descriptions in Example 13. Details are not described herein again.

Manner 3: The first network element obtains and determines the identifier of the first device management network element from the fourth network element based on the operation message.

In this manner, the first network element may send a first request message to the fourth network element based on the operation message, where the first request message is used to request to select a device management network element. Further, the first network element receives a first response message from the fourth network element, where the first response message includes the identifier of the first device management network element.

It may be understood as that, after receiving the operation message from the second network element, the first network element generates the first request message based on content of the operation message. For example, when the operation message includes the identifier of the second network element, the first request message includes the identifier of the second network element, and the first request message is used to request to select the device management network element based on the identifier of the second network element. When the operation message includes the identifier of the target terminal or the location information of the target terminal, the first request message includes the location information of the target terminal, and the first request message is used to request to select the device management network element based on the location information of the target terminal. When the operation message includes the indication information of the first passive internet of things service, the first request message includes capability information of the first device management network element (which may be understood as requirement information of the passive internet of things service capability of the determined first device management network element), and the first request message is used to request to select the device management network element based on the capability information, to determine the first device management network element that has the passive internet of things service capability. Further, the fourth network element determines the identifier of the first device management network element based on a mapping relationship set stored in the fourth network element, and sends, to the first network element, the first response message that carries the identifier of the first device management network element. For specific descriptions of the mapping relationship set, refer to the descriptions of the mapping relationship set in Manner 1. Details are not described herein again.

In Example 17, the fourth network element receives the first request message from the first network element, where the first request message includes information about a first location of the target terminal. Further, the fourth network element determines the identifier of the first device management network element based on a locally stored first mapping relationship set. The first mapping relationship set includes a mapping relationship between the identifier of the first device management network element and the information about the first location. The fourth network element sends the first response message to the first network element, where the first response message includes the identifier of the first device management network element.

In Example 18, the fourth network element receives the first request message from the first network element, where the first request message includes the identifier of the second network element. Further, the fourth network element determines the identifier of the first device management network element based on a locally stored second mapping relationship set. The second mapping relationship set includes a mapping relationship between the identifier of the first device management network element and the identifier of the second network element. The fourth network element sends the first response message to the first network element, where the first response message includes the identifier of the first device management network element.

In Example 19, the fourth network element receives the first request message from the first network element, where the first request message includes the capability information of the first device management network element. The fourth network element determines the identifier of the first device management network element based on the capability information and a locally stored fourth mapping relationship set, where the fourth mapping relationship set includes a mapping relationship between the identifier and the capability information that are of the first device management network element. The fourth network element sends the first response message to the first network element, where the first response message includes the identifier of the first device management network element.

In Example 20, the fourth network element receives the first request message from the first network element, where the first request message includes information about a first location of the target terminal and the identifier of the second network element. The fourth network element determines the first device management network element based on the identifier of the second network element, a locally stored second mapping relationship set, the information about the first location, and a locally stored first mapping relationship set. The first mapping relationship set includes a mapping relationship between the identifier of the first device management network element and the information about the first location, and the second mapping relationship set includes a mapping relationship between the identifier of the first device management network element and the identifier of the second network element.

In Example 21, the fourth network element receives the first request message from the first network element, where the first request message includes information about a first location of the target terminal and the capability information of the first device management network element. The fourth network element determines the first device management network element based on the information about the first location, a locally stored first mapping relationship set, the capability information, and a locally stored fourth mapping relationship set. The first mapping relationship set includes a mapping relationship between the identifier of the first device management network element and the information about the first location, and the fourth mapping relationship set includes a mapping relationship between the identifier and the capability information that are of the first device management network element.

In Example 22, the fourth network element receives the first request message from the first network element, where the first request message includes the identifier of the second network element and the capability information of the first device management network element. The fourth network element determines the first device management network element based on the identifier of the second network element, a locally stored second mapping relationship set, the capability information, and a locally stored fourth mapping relationship set. The second mapping relationship set includes a mapping relationship between the identifier of the first device management network element and the identifier of the second network element, and the fourth mapping relationship set includes a mapping relationship between the identifier and the capability information that are of the first device management network element.

In Example 23, the fourth network element receives the first request message from the first network element, where the first request message includes information about a first location of the target terminal, the identifier of the second network element, and the capability information of the first device management network element. The fourth network element determines the first device management network element based on the identifier of the second network element, a locally stored second mapping relationship set, the information about the first location, a locally stored first mapping relationship set, the capability information, and a locally stored fourth mapping relationship set. The first mapping relationship set includes a mapping relationship between the identifier of the first device management network element and the information about the first location, the second mapping relationship set includes a mapping relationship between the identifier of the first device management network element and the identifier of the second network element, and the fourth mapping relationship set includes a mapping relationship between the identifier and the capability information that are of the first device management network element.

In Manner 3, the fourth network element is further configured to receive an information update/registration request from the first device management network element, where the information update/registration request includes the passive internet of things service capability of the first device management network element. The fourth network element maintains, based on the information update/registration request, the mapping relationship set stored in the fourth network element. The information update/registration request further includes one or more of the following information: the mapping relationship between the identifier of the first device management network element and the identifier of the second network element, or a mapping relationship between the identifier of the first device management network element and the location information.

It should be noted that in this application, when the examples (namely, Example 1 to Example 23) in Manner 1 to Manner 3 are described, content of the mapping relationship sets in some scenarios is merely examples for illustration, and this should not be considered as a specific limitation on this application. In other words, any combination of the mapping relationship sets (namely, the first mapping relationship set to the fourth mapping relationship set) described Manner 1 to Manner 3 may be fall within the protection scope of this application.

S203: The first network element sends the operation message to the first device management network element.

After obtaining the identifier of the first device management network element, the first network element forwards the operation message to the first device management network element, so that the first device management network element provides a service for the target terminal based on the operation message.

Specifically, the first device management network element receives the operation message from the first network element, and sends, based on the operation message, indication information to an access network device corresponding to the target terminal, where the indication information indicates to perform random access to the target terminal. For example, after receiving the indication information, the access network device broadcasts random access signaling (including the identifier of the target terminal) based on the indication information. After receiving the random access signaling, the target terminal performs random access based on the random access signaling. After receiving the random access signaling, another terminal ignores the random access signaling (which may be understood as not responding to the random access signaling). Further, the first device management network element performs a corresponding operation on the target terminal based on the operation message. For example, when the operation message is an inventory operation message, after the target terminal performs random access, the access network device feeds back the identifier of the target terminal to the first device management network element. When the operation message is a read operation message or a write operation message, after the target terminal performs random access, the access network device feeds back the identifier of the target terminal to the first device management network element, and the first device management network element sends a read operation instruction or a write operation instruction to the target terminal.

In conclusion, the server/the application function network element (namely, the second network element) triggers a procedure of selecting the device management network element by using the operation message, to select the first device management network element that has the passive internet of things service capability, so that the first device management network element provides a service for a passive terminal device. This helps ensure reliability of communication between the second network element and the passive terminal device.

After the first device management network element that provides a service for the target terminal is determined, there is a scenario in which the device management network element that provides a service for the target terminal needs to be switched. For example, the target terminal moves out of a service area range of the first device management network element. In view of this, this application further provides a device management network element determining method.

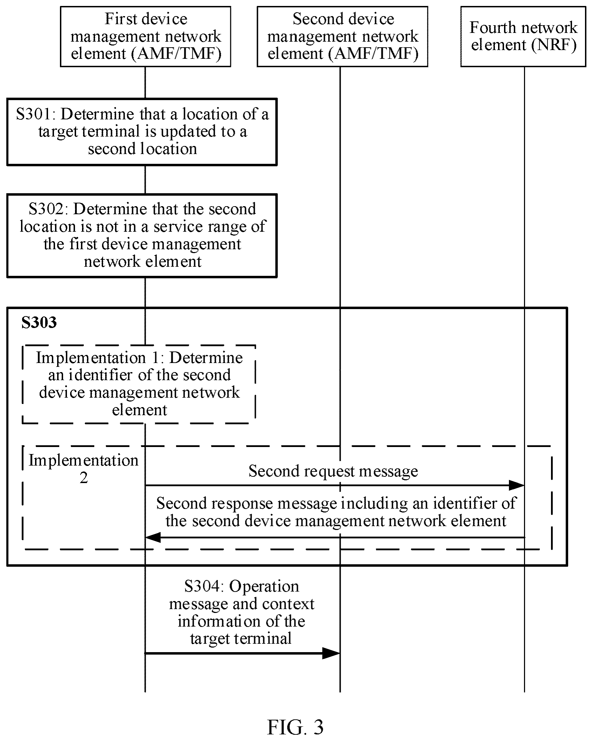

FIG. 3 is a schematic flowchart of a device management network element determining method. As shown in FIG. 3, FIG. 3 is described by using an example in which a first network element, a fourth network element, a first device management network element, and a target terminal are execution bodies. It may be understood that the device management network element determining method may alternatively be performed by chips in the first network element, a second network element, a third network element, the fourth network element, an access network device, and the target terminal.

It should be noted that, for the descriptions of the first network element, the fourth network element, the first device management network element, and the target terminal, refer to the descriptions in FIG. 2. Details are not described herein again.

S301: The first device management network element determines that a location of the target terminal is updated to a second location.

When the first device management network element is determined for providing a service for the target terminal, the target terminal is at a first location. When a second device management network element detects that the target terminal moves from the first location to the second location, the first device management network element determines that the location of the target terminal is updated to the second location.

S302: The first device management network element determines that the second location is not in a service range of the first device management network element.

In other words, the first device management network element corresponds to the service range, and the first device management network element provides a service for a terminal device in the service range. The first device management network element obtains information about the second location, and determines, based on the information about the second location and the service range (or understood as a service area) of the first device management network element, that the second location is not in the service range.

For example, when the second network element needs to perform an operation on the target terminal at a location 1 (that is, the first location), the second network element sends an operation message 1 to the first network element, and the first network element determines, according to the method described in FIG. 2, that a device management network element 1 (that is, the first device management network element) provides the service for the target terminal. Subsequently, the target terminal moves from the location 1 to a location 2. When the second network element needs to perform an operation on the target terminal at the location 2 (that is, the second location), the second network element sends an operation message 2 to the first network element, and may obtain an identifier of the target terminal and the information about the second location based on the operation message 2. Further, the first network element may determine, based on information about a historical device management network element that provides a service for the target terminal (that is, information about a device management network element that has served the target terminal, which is the device management network element 1 herein), that the device management network element 1 provides a service for the target terminal at the location 2. The first network element sends the operation message 2 to the device management network element 1. After receiving the operation message 2, the device management network element 1 determines that the location of the target terminal is updated to the location 2, and the location 2 is not in the service range of the device management network element 1.

It should be noted that, in the foregoing example, the device management network element 1 receives the operation message 2 through a control plane network element (namely, the first network element). In a possible implementation, if an N4 session between a user plane function network element (for example, a UPF) and a session management function network element (for example, an SMF) has been established, the device management network element 1 may also receive an operation message (including the operation message 2) from the second network element through the user plane network element. In other words, the second network element sends the operation message 2 to the user plane function network element; the user plane function network element sends the operation message 2 to the session management function network element; and the session management function network element sends the operation message 2 to the device management network element 1.

S303: The first device management network element obtains an identifier of the second device management network element, where the identifier of the second device management network element corresponds to the information about the second location.

After the first device management network element determines that the second location is not in the service range of the first device management network element, the second device management network element obtains the identifier of the second device management network element based on the second location, where the identifier of the second device management network element corresponds to information about the second location (in other words, the second location is in a service range of the second device management network element).

In a possible implementation 1 of S303, the first device management network element obtains a first mapping relationship set, where the first mapping relationship set includes a mapping relationship between location information and an identifier of a device management network element, specifically, the first mapping relationship set includes at least a mapping relationship between the information about the second location and the identifier of the second device management network element. Further, the first device management network element determines the identifier of the second device management network element based on the first mapping relationship set and the information about the second location, where the second device management network element has a passive internet of things service capability.

The first device management network element may store the first mapping relationship set. Alternatively, the first device management network element may obtain the first mapping relationship set from the third network element. For example, the first device management network element sends an obtaining request message to the third network element, where the obtaining request message is used to obtain the first mapping relationship set; and further, the first device management network element receives a response message from the third network element, where the response message includes the first mapping relationship set. Alternatively, the first device management network element may obtain the first mapping relationship set from the first network element. For example, after the first network element determines, according to the method shown in FIG. 2, that the first device management network element provides the service for the target terminal at the first location, the first network element sends the first mapping relationship set to the first device management network element.

In a possible implementation 2 of S303, the first device management network element sends a second request message to the fourth network element, where the second request message is used to request the fourth network element to determine the device management network element that provides the service for the target terminal, and the second request message includes the information about the second location and requirement information of a passive internet of things service capability. The first device management network element receives a second response message from the fourth network element, where the second response message includes the identifier of the second device management network element.

In other words, the fourth network element receives the second request message from the first device management network element, where the second request message is used to request the fourth network element to determine the device management network element that provides the service for the target terminal, and the second request message includes the information about the second location and the requirement information of the passive internet of things service capability. Further, the fourth network element determines the identifier of the second device management network element based on the information about the second location and the locally stored first mapping relationship set, where the first mapping relationship set further includes a mapping relationship between the identifier of the second device management network element and the information about the second location. The fourth network element sends the identifier of the second device management network element to the first device management network element.

S304: The first device management network element sends the operation message and context information of the target terminal to the second device management network element.

After the first device management network element obtains the identifier of the second device management network element, the first device management network element sends the operation message and the context information of the target terminal to the second device management network element, so that the second device management network element provides a service for the target terminal.

In a possible implementation, the first device management network element may further send the identifier of the second device management network element to the first network element, where the identifier of the second device management network element indicates the first network element to update the information about the historical device management network element that provides the service for the target terminal. It may be understood as that the first device management network element notifies the first network element to subsequently send an operation message corresponding to the target terminal to the second device management network element.

In conclusion, when the first device management network element cannot provide the service for the target terminal, the first device management network element can determine that the second device management network element provides the service for the target terminal, to ensure reliability of communication between the second network element and the target terminal.

It should be declared that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

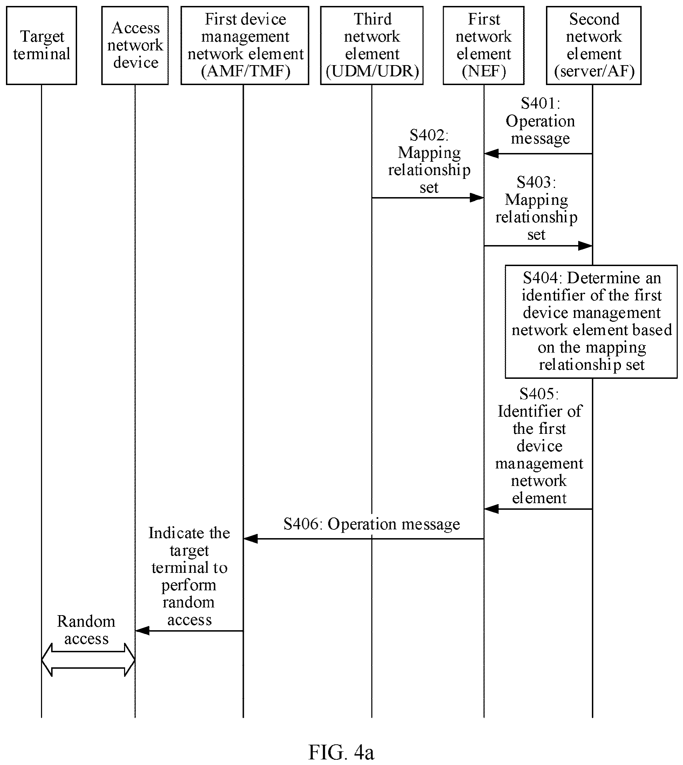

In an example, refer to a device management network element determining method shown in FIG. 4a. FIG. 4a is described by using an example in which the foregoing first network element, second network element, and third network element are execution bodies. It may be understood that the device management network element determining method may alternatively be performed by apparatuses (for example, chips) corresponding to a first network element, a second network element, and a third network element.

S401: The first network element receives an operation message from the second network element, where the operation message is used to perform an operation on a target terminal, and the target terminal is a device corresponding to a first passive internet of things service.

For a specific implementation of S401, refer to the descriptions of the specific implementation of S201. Details are not described herein again.

S402: The first network element obtains a mapping relationship set from the third network element.

The mapping relationship set is a first mapping relationship set or a second mapping relationship set. The first mapping relationship set includes a mapping relationship between an identifier of a first device management network element and information about a first location. The second mapping relationship set includes a mapping relationship between the identifier of the first device management network element and an identifier of the second network element.

S403: The first network element sends the mapping relationship set to the second network element.

S404: The second network element determines the identifier of the first device management network element based on the mapping relationship set.

S405: The first network element receives the identifier of the first device management network element from the second network element.

For specific implementations of S402 to S405, refer to the descriptions of the specific implementation of Branch 2 of Manner 2 in S202. Details are not described herein again.

S406: The first network element sends the operation message to the first device management network element.

For a specific implementation of S406, refer to the descriptions of the specific implementation of S203. Details are not described herein again.

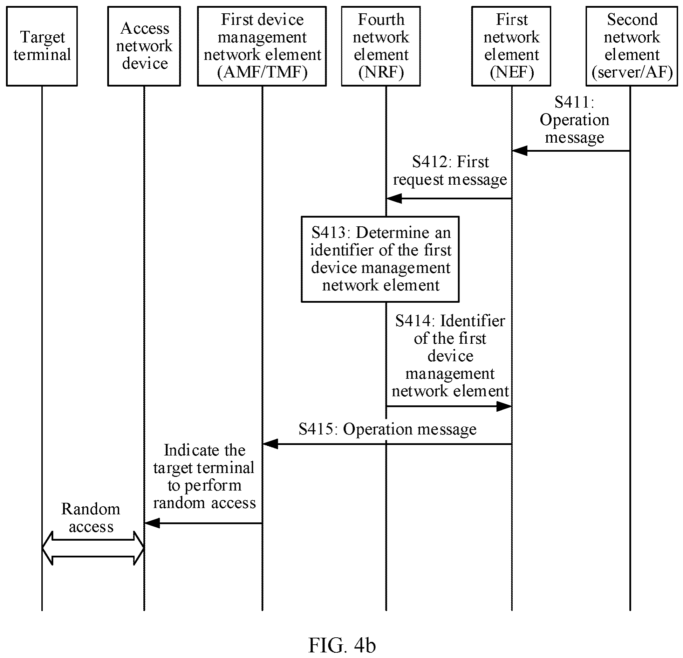

In another example, refer to a device management network element determining method shown in FIG. 4b. FIG. 4b is described by using an example in which the foregoing first network element, second network element, and fourth network element are execution bodies. It may be understood that the device management network element determining method may alternatively be performed by apparatuses (for example, chips) corresponding to a first network element, a second network element, and a fourth network element.

S411: The first network element receives an operation message from the second network element, where the operation message is used to perform an operation on a target terminal, and the target terminal is a device corresponding to a first passive internet of things service.

For a specific implementation of S411, refer to the descriptions of the specific implementation of S201. Details are not described herein again.

S412: The first network element sends a first request message to the fourth network element, where the first request message is used to request to select a device management network element.

S413: The fourth network element determines an identifier of a first device management network element based on a locally stored mapping relationship set.

The mapping relationship set is a first mapping relationship set or a second mapping relationship set. The first mapping relationship set includes a mapping relationship between the identifier of the first device management network element and information about a first location. The second mapping relationship set includes a mapping relationship between the identifier of the first device management network element and an identifier of the second network element.

S414: The first network element receives the identifier of the first device management network element from the fourth network element.

For specific implementations of S412 to S414, refer to the descriptions of the specific implementation of Manner 3 in S202. Details are not described herein again.

S415: The first network element sends the operation message to the first device management network element.

For a specific implementation of S415, refer to the descriptions of the specific implementation of S203. Details are not described herein again.

To implement functions in the methods provided in embodiments of this application, the first network element, the second network element, the fourth network element, and the first device management network element may include a hardware structure and/or a software module, and implement the functions in a form of the hardware structure, the software module, or the hardware structure and the software module. Whether a function in the functions is performed by using the hardware structure, the software module, or the hardware structure and the software module depends on a particular application and a design constraint of the technical solutions.

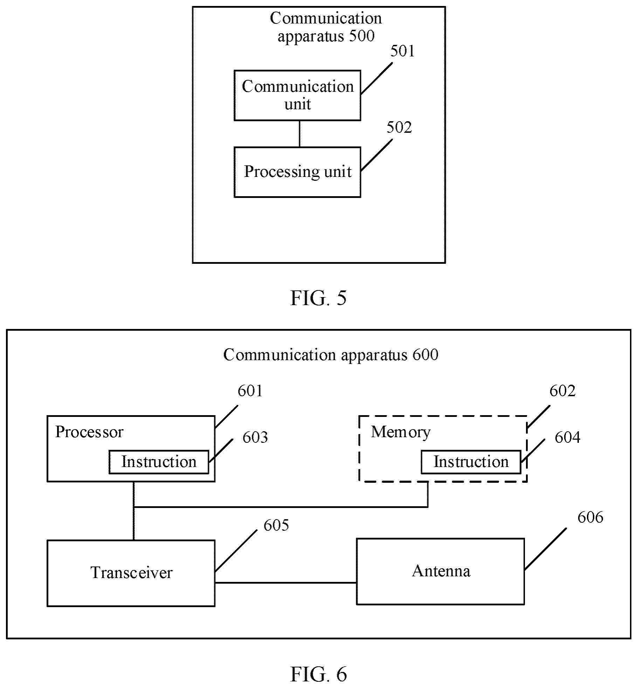

As shown in FIG. 5, an embodiment of this application provides a communication apparatus 500. The communication apparatus 500 may be a component (for example, an integrated circuit or a chip) of a first network element, may be a component (for example, an integrated circuit or a chip) of a second network element, may be a component (for example, an integrated circuit or a chip) of a fourth network element, or may be a component (for example, an integrated circuit or a chip) of a first device management network element. Alternatively, the communication apparatus 500 may be another communication unit, configured to implement methods in method embodiments of this application. The communication apparatus 500 may include a communication unit 501 and a processing unit 502. In a possible design, the communication apparatus may further include a storage unit (not shown in the figure), and the storage unit is configured to store data (for example, a mapping relationship set).

In a possible design, one or more units in FIG. 5 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 500 has a function of implementing the first network element, the second network element, or the fourth network element described in embodiments of this application. For example, the communication apparatus 500 includes a corresponding module, unit, or means (means) for performing the steps of the first network element, the second network element, or the fourth network element described in embodiments of this application. The function, the unit, or the means (means) may be implemented by software, hardware, hardware executing corresponding software, or a combination of software and hardware. For details, further refer to the corresponding descriptions in the foregoing corresponding method embodiment.

In a possible design, the communication apparatus 500 may include the processing unit 502 and the communication unit 501.

The communication unit 501 is configured to receive an operation message from a second network element, where the operation message is used to perform an operation on a target terminal, and the target terminal is a device corresponding to a first passive internet of things service.

The processing unit 502 is configured to obtain an identifier of a first device management network element based on the operation message, where the first device management network element is configured to provide a service for the target terminal.

The communication unit 501 is further configured to send the operation message to the first device management network element.

In a possible implementation, the processing unit 502 is further configured to obtain location information of the target terminal, where the target terminal is at a first location. The processing unit 502 is further configured to determine the identifier of the first device management network element based on a locally stored first mapping relationship set, where the first mapping relationship set includes a mapping relationship between the identifier of the first device management network element and information about the first location.

In a possible implementation, the communication unit 501 is further configured to obtain the first mapping relationship set from a third network element. The processing unit 502 is further configured to obtain the location information of the target terminal, where the target terminal is at the first location. The processing unit 502 is further configured to determine the identifier of the first device management network element based on the first mapping relationship set, where the first mapping relationship set includes the mapping relationship between the identifier of the first device management network element and the information about the first location.

In a possible implementation, the operation message includes an identifier of the second network element. The processing unit 502 is further configured to determine the identifier of the first device management network element based on the identifier of the second network element and a locally stored second mapping relationship set, where the second mapping relationship set includes a mapping relationship between the identifier of the first device management network element and the identifier of the second network element.

In a possible implementation, the operation message includes the identifier of the second network element. The communication unit 501 is further configured to obtain the second mapping relationship set from the third network element. The processing unit 502 is further configured to determine the identifier of the first device management network element based on the identifier of the second network element and the second mapping relationship set, where the second mapping relationship set includes the mapping relationship between the identifier of the first device management network element and the identifier of the second network element.

In a possible implementation, the communication unit 501 is further configured to obtain a mapping relationship set from the third network element, where the mapping relationship set is the first mapping relationship set or the second mapping relationship set, the first mapping relationship set includes the mapping relationship between the identifier of the first device management network element and the information about the first location, and the second mapping relationship set includes the mapping relationship between the identifier of the first device management network element and the identifier of the second network element. The communication unit 501 is further configured to send the mapping relationship set to the second network element. The communication unit 501 is further configured to receive the identifier of the first device management network element from the second network element.

In a possible implementation, the communication unit 501 is further configured to send a first request message to the fourth network element, where the first request message is used to request to select a device management network element. The communication unit 501 is further configured to receive a first response message from the fourth network element, where the first response message includes the identifier of the first device management network element.

For more detailed descriptions of the communication unit 501 and the processing unit 502, refer to the related descriptions of the first network element in the method embodiments in FIG. 2 to FIG. 4b. This is not described herein again.

In a possible design, the communication apparatus 500 may include the communication unit 501 and the processing unit 502.

The processing unit 502 is configured to determine an identifier of a first device management network element based on a mapping relationship set, where the first device management network element has a passive internet of things service capability, and the first device management network element is configured to provide a service for a target terminal; the mapping relationship set includes a mapping relationship about an identifier of a device management network element, and the mapping relationship set is a first mapping relationship set or a second mapping relationship set; the first mapping relationship set includes a mapping relationship between location information and the identifier of the device management network element; and the second mapping relationship set includes a mapping relationship between an identifier of the second network element and the identifier of the device management network element. The communication unit 501 is configured to send the identifier of the first device management network element and an operation message to the first network element, where the operation message is used to perform an operation on the target terminal, and the target terminal is a device corresponding to a first passive internet of things service.

In a possible implementation, the communication unit 501 is configured to receive the mapping relationship set from the first network element.

In a possible implementation, when the mapping relationship set is the first mapping relationship set, the processing unit 502 is further configured to determine the identifier of the first device management network element based on the first mapping relationship set and location information of the target terminal.

In a possible implementation, when the mapping relationship set is the second mapping relationship set, the processing unit 502 is further configured to determine the identifier of the first device management network element based on the second mapping relationship set and the identifier of the second network element.

In a possible implementation, the operation message includes the identifier of the second network element and one or more of the following information: an operation instruction, identification information of the target terminal, indication information of the first passive internet of things service, and the location information of the target terminal.

For detailed descriptions of the communication unit 501 and the processing unit 502, refer to the related descriptions of the second network element in the method embodiments in FIG. 2 to FIG. 4b. This is not described herein again.

In a possible design, the communication apparatus 500 may include the processing unit 502 and the communication unit 501.

The communication unit 501 is configured to receive a first request message from the first network element, where the first request message is used to request to select a device management network element.

The processing unit 502 is configured to determine identification information of a first device management network element based on a mapping relationship set, where the first device management network element is configured to provide a service for a target terminal; the first device management network element has a passive internet of things service capability; and the mapping relationship set includes a mapping relationship related to an identifier of a device management network element, and the mapping relationship set may be a first mapping relationship set or a second mapping relationship set. The first mapping relationship set includes a mapping relationship between location information and the identifier of the device management network element; the second mapping relationship set includes a mapping relationship between an identifier of a server/an AF and the identifier of the device management network element.

The communication unit 501 is further configured to send a first response message to the first network element, where the first response message includes an identifier of the first device management network element.

In a possible implementation, the first request message includes location information of the target terminal and a requirement for the device management network element to have the passive internet of things service capability. The mapping relationship set is the first mapping relationship set. The processing unit 502 is further configured to determine the identification information of the first device management network element based on the first mapping relationship set and the location information of the target terminal.

In a possible implementation, the first request message includes an identifier of the second network element. The mapping relationship set is the second mapping relationship set. The processing unit 502 is further configured to determine the identification information of the first device management network element based on the second mapping relationship set and the identifier of the second network element.

In a possible implementation, the communication unit 501 is further configured to receive an information update/registration request from the first device management network element, where the information update/registration request includes the passive internet of things service capability of the first device management network element. The processing unit 502 is further configured to maintain the mapping relationship set based on the information update/registration request.

In a possible implementation, the information update/registration request further includes one or more of the following information: a mapping relationship between the identifier of the first device management network element and the identifier of the second network element, or a mapping relationship between the identifier of the first device management network element and the location information.

For detailed descriptions of the communication unit 501 and the processing unit 502, refer to the related descriptions of the fourth network element in the method embodiments in FIG. 2 to FIG. 4b. This is not described herein again.

An embodiment of this application further provides a communication apparatus 600. FIG. 6 is a diagram of a structure of the communication apparatus 600. The communication apparatus 600 may be a first network element, or may be a chip, a chip system, a processor, or the like that supports the first network element in implementing the foregoing methods. The communication apparatus 600 may alternatively be a second network element, or may be a chip, a chip system, a processor, or the like that supports the second network element in implementing the foregoing methods. The communication apparatus 600 may alternatively be a fourth network element, or may be a chip, a chip system, a processor, or the like that supports the fourth network element in implementing the foregoing methods. The apparatus may be configured to implement the methods described in the foregoing method embodiments. For details, refer to the descriptions in the foregoing method embodiments.

The communication apparatus 600 may include one or more processors 601. The processor 601 may be a general-purpose processor, a dedicated-purpose processor, or the like. For example, the processor 601 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 600 may include one or more memories 602. The memory 602 may store instructions 604. The instructions may be run on the processor 601, so that the communication apparatus 600 performs the methods described in the foregoing method embodiments. Optionally, the memory 602 may further store data. The processor 601 and the memory 602 may be disposed separately, or may be integrated together.

The memory 602 may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 600 may further include a transceiver 605 and an antenna 606. The transceiver 605 may be referred to as a transceiver unit, a transceiver machine, a transceiver circuit, or the like, and is configured to implement a transceiver function. The transceiver 605 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 600 is the first network element, and the communication apparatus 600 is configured to perform steps performed by the first network element in the device management network element determining methods shown in FIG. 2 to FIG. 4b.

The communication apparatus 600 is the second network element, and the communication apparatus 600 is configured to perform steps performed by the second network element in the device management network element determining methods shown in FIG. 2 to FIG. 4b.

The communication apparatus 600 is the fourth network element, and the communication apparatus 600 is configured to perform steps performed by the fourth network element in the device management network element determining methods shown in FIG. 2 to FIG. 4b.

In another possible design, the processor 601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to: read and write code/data. Alternatively, the transceiver circuit, the interface, or the interface circuit may be configured to transmit or transfer a signal.

In still another possible design, optionally, the processor 601 may store instructions 603. The instructions 603 are run on the processor 601, so that the communication apparatus 600 performs the methods described in the foregoing method embodiments. The instructions 603 may be fixed in the processor 601. In this case, the processor 601 may be implemented by hardware.

In still another possible design, the communication apparatus 600 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in this embodiment of this application is not limited thereto, and the structure of the communication apparatus may not be limited by that in FIG. 5. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (modulator); or
(4) a module that can be embedded in another device.

The communication apparatus and the chip in this embodiment of this application may further perform the implementations described in the communication apparatus 500. A person skilled in the art may further understand that various illustrative logical blocks (illustrative logical blocks) and steps (steps) that are listed in embodiments of this application may be implemented by electronic hardware, computer software, or a combination thereof. Whether such a function is implemented by hardware or software depends on a particular application and a design requirement of an entire system. A person skilled in the art may use various methods to implement the described function for each particular application, but it should not be considered that the implementation goes beyond the protection scope of embodiments of this application.

This embodiment of this application and the method embodiments shown in the device management network element determining methods are based on a same concept, and bring same technical effects. For a specific principle, refer to the descriptions of embodiments shown in the device management network element determining methods. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes a first network element, a second network element, and a third network element. In another possible design, the system may further include another device (for example, a first device management network element, an access network device, or a target terminal) that interacts with the first network element, the second network element, and the third network element in the solutions provided in this application.

This application further provides a communication system. The system includes a first network element, a second network element, and a fourth network element. In another possible design, the system may further include another device (for example, a first device management network element, an access network device, or a target terminal) that interacts with the first network element, the second network element, and the fourth network element in the solutions provided in this application.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device management network element determining method, wherein the method comprises:
receiving, by a first network element, an operation message from a second network element, wherein the operation message is used to perform an operation on a target terminal, and the target terminal is a device corresponding to a first passive internet of things service;
obtaining, by the first network element, an identifier of a first device management network element based on the operation message, wherein the first device management network element is configured to provide a service for the target terminal; and
sending, by the first network element, the operation message to the first device management network element.

2. The method according to claim 1, wherein obtaining, by the first network element, the identifier of the first device management network element based on the operation message comprises:
obtaining, by the first network element, location information of the target terminal, wherein the target terminal is at a first location; and
determining, by the first network element, the identifier of the first device management network element based on a locally stored first mapping relationship set, wherein the first mapping relationship set comprises a mapping relationship between the identifier of the first device management network element and information about the first location.

3. The method according to claim 1, wherein obtaining, by the first network element, the identifier of the first device management network element based on the operation message comprises:
obtaining, by the first network element, a first mapping relationship set from a third network element;
obtaining, by the first network element, location information of the target terminal, wherein the target terminal is at a first location; and
determining, by the first network element, the identifier of the first device management network element based on the first mapping relationship set, wherein the first mapping relationship set comprises a mapping relationship between the identifier of the first device management network element and information about the first location.

4. The method according to claim 1, wherein the operation message comprises an identifier of the second network element; and obtaining, by the first network element, the identifier of the first device management network element based on the operation message comprises:
determining, by the first network element, the identifier of the first device management network element based on the identifier of the second network element and a locally stored second mapping relationship set, wherein the second mapping relationship set comprises a mapping relationship between the identifier of the first device management network element and the identifier of the second network element.

5. The method according to claim 1, wherein the operation message comprises an identifier of the second network element; and obtaining, by the first network element, the identifier of the first device management network element based on the operation message comprises:
obtaining, by the first network element, a second mapping relationship set from a third network element; and
determining, by the first network element, the identifier of the first device management network element based on the identifier of the second network element and the second mapping relationship set, wherein the second mapping relationship set comprises a mapping relationship between the identifier of the first device management network element and the identifier of the second network element.

6. The method according to claim 1, wherein obtaining, by the first network element, the identifier of the first device management network element based on the operation message comprises:
obtaining, by the first network element, a mapping relationship set from a third network element, wherein the mapping relationship set is a first mapping relationship set or a second mapping relationship set, the first mapping relationship set comprises a mapping relationship between the identifier of the first device management network element and information about a first location, and the second mapping relationship set comprises a mapping relationship between the identifier of the first device management network element and an identifier of the second network element;
sending, by the first network element, the mapping relationship set to the second network element; and
receiving, by the first network element, the identifier of the first device management network element from the second network element.

7. The method according to claim 6, wherein the mapping relationship set is the first mapping relationship set; and the method further comprises:
receiving, by the second network element, the first mapping relationship set from the first network element;
determining, by the second network element, that the target terminal is at the first location;
determining, by the second network element, the identifier of the first device management network element based on the information about the first location and the first mapping relationship set; and
sending, by the second network element, the identifier of the first device management network element to the first network element.

8. The method according to claim 6, wherein the mapping relationship set is the second mapping relationship set; and the method further comprises:
receiving, by the second network element, the first mapping relationship set from the first network element;
determining, by the second network element, the identifier of the first device management network element based on the identifier of the second network element and the second mapping relationship set; and
sending, by the second network element, the identifier of the first device management network element to the first network element.

9. The method according to claim 1, wherein obtaining, by the first network element, the identifier of the first device management network element based on the operation message comprises:
sending, by the first network element, a first request message to a fourth network element, wherein the first request message is used to request to select a device management network element; and
receiving, by the first network element, a first response message from the fourth network element, wherein the first response message comprises the identifier of the first device management network element.

10. The method according to claim 9, wherein the method further comprises:
receiving, by the fourth network element, the first request message from the first network element, wherein the first request message comprises information about a first location of the target terminal;
determining, by the fourth network element, the identifier of the first device management network element based on a locally stored first mapping relationship set, wherein the first mapping relationship set comprises a mapping relationship between the identifier of the first device management network element and the information about the first location; and
sending, by the fourth network element, the first response message to the first network element, wherein the first response message comprises the identifier of the first device management network element.

11. The method according to claim 9, wherein the method further comprises:
receiving, by the fourth network element, the first request message from the first network element, wherein the first request message comprises an identifier of the second network element;
determining, by the fourth network element, the identifier of the first device management network element based on a locally stored second mapping relationship set, wherein the second mapping relationship set comprises a mapping relationship between the identifier of the first device management network element and the identifier of the second network element; and
sending, by the fourth network element, the first response message to the first network element, wherein the first response message comprises the identifier of the first device management network element.

12. The method according to any one of claims 1 to 11, wherein the method further comprises:
receiving, by the first device management network element, the operation message from the first network element;
sending, by the first device management network element based on the operation message, indication information to an access network device corresponding to the target terminal, wherein the indication information indicates to perform random access to the target terminal; and
indicating, by the access network device based on the indication information, the target terminal to perform random access.

13. The method according to any one of claims 1 to 12, wherein the method further comprises:
determining, by the first device management network element, that a location of the target terminal is updated to a second location;
determining, by the first device management network element, that the second location is not in a service range of the first device management network element;
obtaining, by the first device management network element, an identifier of a second device management network element, wherein the identifier of the second device management network element corresponds to information about the second location; and
sending, by the first device management network element, the operation message and context information of the target terminal to the second device management network element.

14. The method according to claim 13, wherein obtaining, by the first device management network element, the identifier of the second device management network element comprises:
obtaining, by the first device management network element, the first mapping relationship set, wherein the first mapping relationship set further comprises a mapping relationship between the identifier of the second device management network element and the information about the second location; and
determining, by the first device management network element, the identifier of the second device management network element based on the information about the second location and the first mapping relationship set.

15. The method according to claim 13, wherein obtaining, by the first device management network element, the identifier of the second device management network element comprises:
sending, by the first device management network element, a second request message to the fourth network element, wherein the second request message is used to request the fourth network element to determine a device management network element that provides a service for the target terminal, and the second request message comprises the information about the second location and requirement information of a passive internet of things service capability; and
receiving, by the first device management network element, a second response message from the fourth network element, wherein the second response message comprises the identifier of the second device management network element.

16. The method according to claim 15, wherein the method further comprises:
receiving, by the fourth network element, the second request message from the first device management network element, wherein the second request message is used to request the fourth network element to determine the device management network element that provides a service for the target terminal, and the second request message comprises the information about the second location and the requirement information of the passive internet of things service capability;
determining, by the fourth network element, the identifier of the second device management network element based on the information about the second location and the first mapping relationship set, wherein the first mapping relationship set further comprises a mapping relationship between the identifier of the second device management network element and the information about the second location; and
sending, by the fourth network element, the identifier of the second device management network element to the first device management network element.

17. The method according to any one of claims 1 to 16, wherein the operation message comprises the identifier of the second network element and one or more of the following information: an operation instruction, identification information of the target terminal, indication information of the first passive internet of things service, and the location information of the target terminal.

18. A communication apparatus, wherein the apparatus comprises:
a communication unit, configured to receive an operation message from a second network element, wherein the operation message is used to perform an operation on a target terminal, and the target terminal is a device corresponding to a first passive internet of things service; and
a processing unit, configured to obtain an identifier of a first device management network element based on the operation message, wherein the first device management network element is configured to provide a service for the target terminal, wherein
the communication unit is further configured to send the operation message to the first device management network element.

19. The apparatus according to claim 18, wherein
the processing unit is further configured to obtain location information of the target terminal, wherein the target terminal is at a first location; and
the processing unit is further configured to determine the identifier of the first device management network element based on a locally stored first mapping relationship set, wherein the first mapping relationship set comprises a mapping relationship between the identifier of the first device management network element and information about the first location.

20. The apparatus according to claim 18, wherein
the communication unit is further configured to obtain a first mapping relationship set from a third network element;
the processing unit is further configured to obtain location information of the target terminal, wherein the target terminal is at a first location; and
the processing unit is further configured to determine the identifier of the first device management network element based on the first mapping relationship set, wherein the first mapping relationship set comprises a mapping relationship between the identifier of the first device management network element and information about the first location.

21. The apparatus according to claim 18, wherein the operation message comprises an identifier of the second network element; and
the processing unit is further configured to determine the identifier of the first device management network element based on the identifier of the second network element and a locally stored second mapping relationship set, wherein the second mapping relationship set comprises a mapping relationship between the identifier of the first device management network element and the identifier of the second network element.

22. The apparatus according to claim 18, wherein the operation message comprises an identifier of the second network element;
the communication unit is further configured to obtain a second mapping relationship set from a third network element; and
the processing unit is further configured to determine the identifier of the first device management network element based on the identifier of the second network element and the second mapping relationship set, wherein the second mapping relationship set comprises a mapping relationship between the identifier of the first device management network element and the identifier of the second network element.

23. The apparatus according to claim 18, wherein
the communication unit is further configured to obtain a mapping relationship set from a third network element, wherein the mapping relationship set is a first mapping relationship set or a second mapping relationship set, the first mapping relationship set comprises a mapping relationship between the identifier of the first device management network element and information about a first location, and the second mapping relationship set comprises a mapping relationship between the identifier of the first device management network element and an identifier of the second network element;
the communication unit is further configured to send the mapping relationship set to the second network element; and
the communication unit is further configured to receive the identifier of the first device management network element from the second network element.

24. The apparatus according to claim 18, wherein
the communication unit is further configured to send a first request message to a fourth network element, wherein the first request message is used to request to select a device management network element; and
the communication unit is further configured to receive a first response message from the fourth network element, wherein the first response message comprises the identifier of the first device management network element.

25. A communication apparatus, wherein the apparatus comprises:
a processing unit, configured to determine an identifier of a first device management network element based on a mapping relationship set, wherein the first device management network element has a passive internet of things service capability, and the first device management network element is configured to provide a service for a target terminal; and the mapping relationship set comprises a mapping relationship about an identifier of a device management network element, the mapping relationship set is a first mapping relationship set or a second mapping relationship set, the first mapping relationship set comprises a mapping relationship between location information and the identifier of the device management network element, and the second mapping relationship set comprises a mapping relationship between an identifier of a second network element and the identifier of the device management network element; and
a communication unit, configured to send the identifier of the first device management network element and an operation message to a first network element, wherein the operation message is used to perform an operation on the target terminal, and the target terminal is a device corresponding to a first passive internet of things service.

26. The apparatus according to claim 25, wherein
the communication unit is further configured to receive the mapping relationship set from the first network element.

27. The apparatus according to claim 25 or 26, wherein when the mapping relationship set is the first mapping relationship set, the processing unit is further configured to determine the identifier of the first device management network element based on the first mapping relationship set and location information of the target terminal.

28. The apparatus according to claim 25 or 26, wherein when the mapping relationship set is the second mapping relationship set, the processing unit is further configured to determine the identifier of the first device management network element based on the second mapping relationship set and the identifier of the second network element.

29. The apparatus according to any one of claims 25 to 28, wherein the operation message comprises the identifier of the second network element and one or more of the following information: an operation instruction, identification information of the target terminal, indication information of the first passive internet of things service, and the location information of the target terminal.

30. A device management network element determining method, wherein the method is applied to a communication system, the communication system comprises a first network element, a second network element, a third network element, and a target terminal, and the method comprises:
receiving, by the first network element, an operation message from the second network element, wherein the operation message is used to perform an operation on the target terminal, and the target terminal is a device corresponding to a first passive internet of things service;
obtaining, by the first network element, a mapping relationship set from the third network element, wherein the mapping relationship set is a first mapping relationship set or a second mapping relationship set, the first mapping relationship set comprises a mapping relationship between an identifier of a first device management network element and information about a first location, and the second mapping relationship set comprises a mapping relationship between the identifier of the first device management network element and an identifier of the second network element;
sending, by the first network element, the mapping relationship set to the second network element;
determining, by the second network element, the identifier of the first device management network element based on the mapping relationship set;
receiving, by the first network element, the identifier of the first device management network element from the second network element; and
sending, by the first network element, the operation message to the first device management network element.

31. The method according to claim 30, wherein the mapping relationship set is the first mapping relationship set; and determining, by the second network element, the identifier of the first device management network element based on the mapping relationship set comprises:
determining, by the second network element, that the target terminal is at the first location; and
determining, by the second network element, the identifier of the first device management network element based on the information about the first location and the first mapping relationship set.

32. The method according to claim 30, wherein the mapping relationship set is the second mapping relationship set; and determining, by the second network element, the identifier of the first device management network element based on the mapping relationship set comprises:
determining, by the second network element, the identifier of the first device management network element based on the identifier of the second network element and the second mapping relationship set.

33. A device management network element determining method, wherein the method is applied to a communication system, the communication system comprises a first network element, a second network element, a fourth network element, and a target terminal, and the method comprises:
receiving, by the first network element, an operation message from the second network element, wherein the operation message is used to perform an operation on the target terminal, and the target terminal is a device corresponding to a first passive internet of things service;
sending, by the first network element, a first request message to the fourth network element, wherein the first request message is used to request to select a device management network element;
determining, by the fourth network element, an identifier of a first device management network element based on a locally stored mapping relationship set, wherein the mapping relationship set is a first mapping relationship set or a second mapping relationship set, wherein the first mapping relationship set comprises a mapping relationship between the identifier of the first device management network element and information about a first location; and the second mapping relationship set comprises a mapping relationship between the identifier of the first device management network element and an identifier of the second network element;
receiving, by the first network element, the identifier of the first device management network element from the fourth network element; and
sending, by the first network element, the operation message to the first device management network element.

34. The method according to claim 33, wherein the first request message comprises the information about the first location of the target terminal, the mapping relationship set is the first mapping relationship set, and
determining, by the fourth network element, the identifier of the first device management network element based on the locally stored mapping relationship set comprises:
determining, by the fourth network element, the identifier of the first device management network element based on the information about the first location and the locally stored first mapping relationship set, wherein the second mapping relationship set comprises the mapping relationship between the identifier of the first device management network element and the information about the first location.

35. The method according to claim 33, wherein the first request message comprises the identifier of the second network element; and the first request message comprises the identifier of the second network element; and
determining, by the fourth network element, the identifier of the first device management network element based on the locally stored mapping relationship set comprises:
determining, by the fourth network element, the identifier of the first device management network element based on the identifier of the second network element and the locally stored second mapping relationship set, wherein the second mapping relationship set comprises the mapping relationship between the identifier of the first device management network element and the identifier of the second network element.

36. A computer-readable storage medium, wherein the storage medium stores a computer program or instructions, and when the computer program or the instructions are executed by an apparatus, the method according to any one of claims 1 to 17 is implemented.

37. A computer program product, wherein when the computer program product is read and executed, a communication apparatus is caused to perform the method according to any one of claims 1 to 17.
